# EUROPEAN PATENT APPLICATION

(11) **EP 4 496 321 A1**
(43) Date of publication of application: **22.01.2025**
(21) Application number: 23791138.3
(22) Date of filing: 14.04.2023
(51) Int. Cl.: H04N 21/433, H04W 48/16

(54) **APPLICATION OPTIMIZATION METHOD AND ELECTRONIC DEVICE**

(30) Priority: 19.04.2022 CN 202210408333
(71) Applicant: Huawei Technologies Co., Ltd., Shenzhen, Guangdong 518129 (CN)
(72) Inventor: ZHANG, Yunji, Shenzhen, Guangdong 518129 (CN)
(74) Representative: Huawei European IPR
(86) International application number: PCT/CN2023/088384
(87) International publication number: WO 2023/202483

(57) **Abstract**

Embodiments of this application provide an application optimization method and an electronic device. The method includes: obtaining offline data when determining that a user is in a preset scenario; and displaying first content based on the offline data, where the offline data is video data buffered by a first application based on a second queue, the first application is used to buffer and play a first video based on a first queue, and the first content is a video played based on the offline data when frame freezing occurs during video playback based on the first queue; or the offline data is application data buffered when it is predicted that the user is in the preset scenario within first duration, and the first content indicates the application data that is buffered; or the offline data is an original first message obtained from a network device, and the first content is the first message displayed based on the offline data stored in the electronic device when a user operation for the first message is received. In this application, when the electronic device cannot obtain online data used to display the first content, the user can normally view the first content.

## Description

This application claims priority to Chinese Patent Application No. 202210408333.2, filed with the China National Intellectual Property Administration on April 19, 2022 and entitled "APPLICATION OPTIMIZATION METHOD AND ELECTRONIC DEVICE", which is incorporated herein by reference in its entirety.

### TECHNICAL FIELD

This application relates to the field of computer technologies, and in particular, to an application optimization method and an electronic device.

### BACKGROUND

When users are traveling, they may encounter situations where they are in areas without network coverage, such as on a plane, or with weak network coverage, such as on a high-speed railway or in the wilderness. In these scenarios, users cannot use their mobile applications normally, for example, their smartphones cannot play short videos when there is no signal, and may experience frame freezing when the signal is weak. Without a signal or with a weak signal, smartphones cannot display the original content of instant messages, such as images, videos, and documents, and users can only see icons or thumbnails instead.

### SUMMARY

Embodiments of this application disclose an application optimization method and an electronic device, so that a user can normally use applications in a travel scenario, which improves user experience.

According to a first aspect, this application provides an application optimization method, applied to an electronic device, where the method includes: buffering data of a first video and playing the first video based on a first queue, and buffering video data based on a second queue; and when frame freezing occurs during video playback based on the first queue, playing a second video based on data that is of the second video and that is buffered in the second queue.

In some embodiments, the buffering data of a first video and playing the first video based on a first queue may be understood as "playing while downloading" or may be understood as that the first queue is used to buffer data of an online video. The buffering video data based on a second queue and the playing a second video based on data that is of the second video and that is buffered in the second queue may be understood as "playing after downloading is completed" or may be understood as that the second queue is used to buffer data of an offline video.

In the foregoing method, the electronic device may buffer an online video based on a first buffer queue, and buffer an offline video based on a second buffer queue. When frame freezing occurs during playback of the online video, the offline video may be played. In this way, playback and downloading of the online video are not affected when the offline video is being downloaded, and user experience in watching videos is effectively improved.

In a possible implementation, the buffering video data based on a second queue includes: buffering video data based on the second queue when determining that a user is in a preset scenario.

In a possible implementation, the preset scenario is a travel scenario, and the determining that a user is in a preset scenario includes: determining that the user is in a first travel location, where the first travel location is any one of an airport, a railway station, a high-speed railway station, a bus station, a subway station, a bus stop, a highway entrance/exit, or a dock; and when the first travel location is not a habitual activity location of the user, determining that the user is in the travel scenario.

In the foregoing method, when determining that the user is in the travel scenario, the electronic device may add a second buffer queue that is to be maintained, to buffer the offline video. When frame freezing occurs during playback of the online video, the electronic device may play the offline video buffered in the second buffer queue. Even if the user in the travel scenario may pass through an area with weak network coverage or an area without network coverage, the user can watch the video normally, which effectively improves user experience.

In a possible implementation, the method further includes: displaying first information when determining that the user is in the preset scenario, where the first information is used to prompt the user to buffer an offline video, or the first information indicates that an offline video is being buffered currently, and the second queue is used to buffer the offline video.

In the foregoing method, the electronic device may display the first information when determining that the user is in the travel scenario, to prompt the user to buffer the offline video or inform the user that the offline video is being buffered currently, so that the user is aware of a buffering status of video data, which further improves user experience.

In a possible implementation, the second queue includes a short-term queue and a long-term queue, a quantity of the short-term queue is less than a quantity of the long-term queue, and a buffering priority of the short-term queue is higher than a buffering priority of the long-term queue; and the playing a second video based on data that is of the second video and that is buffered in the second queue includes: when duration of frame freezing during video playback based on the first queue is less than or equal to first duration, playing the second video based on data that is of the second video and that is buffered in the short-term queue included in the second queue; or when duration of frame freezing during video playback based on the first queue is greater than or equal to second duration, playing the second video based on data that is of the second video and that is buffered in the long-term queue included in the second queue, where the first duration is the same as or different from the second duration.

In the foregoing method, because a case in which playback frame freezing duration is relatively short frequently occurs and in this case, a relatively small amount of video data is required, a video is played based on the short-term queue with a relatively small quantity of queues and a relatively high buffering priority; and because a case in which playback frame freezing duration is relatively long seldom occurs and in this case, a relatively large amount of video data is required, the video is played based on the long-term queue with a relatively large quantity of queues and a relatively low buffering priority. In other words, buffering and playback are controlled based on different service scenarios, for improving device resource utilization and product availability.

In a possible implementation, the method further includes: displaying second information when playing the second video based on the data that is of the second video and that is buffered in the second queue, where the second information indicates that the second video is an offline video.

In the foregoing method, when playing video buffered in the second queue, the electronic device may display the second information, to inform the user that the currently played video is an offline video, so that the user is aware of a playback status of the video, which further improves user experience.

In some embodiments, the method further includes: displaying second information when the second video is played based on the data that is of the second video and that is buffered in the long-term queue, where the second information indicates that the second video is an offline video.

In the foregoing method, when the video is played based on the short-term queue, the second information may not be displayed, so that the user is unaware of impact of short-term frame freezing on video playback as much as possible. When the video is played based on the long-term queue, the second information may be displayed, so that the user is aware of long-term frame freezing and a playback status of the video. In this way, different display manners are used for different cases, to better meet actual requirements of the user, thereby further improving user experience.

In a possible implementation, the preset scenario is the travel scenario, and the method further includes: releasing the second queue when determining that the user arrives at a destination in the travel scenario.

In the foregoing method, when it is determined that the user arrives at the destination in the travel scenario, it may be considered that frame freezing during playback of the online video hardly occurs subsequently. Therefore, the second queue is released. This ensures user experience in watching videos, and further saves device resources and reduces device power consumption.

In a possible implementation, the method further includes: deleting a third video from the second queue when storage duration of the third video that is buffered in the second queue is greater than or equal to third duration.

In the foregoing method, a "timeout deletion" mechanism is performed on video data stored in the second queue, so that the second queue can buffer an offline video that is "updated" and that "more meets a user requirement" for playing, thereby further improving user experience.

According to a second aspect, this application provides an application optimization method, applied to an electronic device, where the method includes: displaying first information when predicting that a user is in a preset scenario within preset duration, where the first information is used to prompt the user to buffer application data; receiving a first user operation; buffering application data of at least one application in response to the first user operation; and displaying second information when determining that the user is in the preset scenario, where the second information indicates buffered application data of the at least one application.

In the foregoing method, when predicting that the user is about to be in the preset scenario, the electronic device may prompt, by using the first information, the user to buffer the application data, and when determining that the user is in the preset scenario, the electronic device indicates buffered application data by using the second information, to accurately prompt the user. Therefore, convenience and probability of using the buffered application data by the user in the preset scenario are improved, product functions better meet user requirements, and user experience is better.

In a possible implementation, the preset scenario is a travel scenario, and the predicting that a user is in a preset scenario within preset duration includes: obtaining first travel information of the user; and when a difference between a current time and a departure time in the first travel information is less than or equal to the preset duration, predicting that the user is in the travel scenario within the preset duration.

In the foregoing method, when predicting that the user is about to be in the travel scenario, the electronic device may prompt, by using the first information, the user to buffer the application data. Subsequently, even if the user in the travel scenario may pass through an area with weak network coverage or an area without network coverage, the user can normally use buffered application data, which effectively improves user experience.

In a possible implementation, the first travel information is travel information with an earliest departure time in travel information of the user.

In the foregoing method, the first travel information is information about a latest travel that is not made, and it is more accurate and reliable to predict, based on the first travel information, whether the user is about to be in the travel scenario.

In a possible implementation, the preset scenario is the travel scenario, and the determining that the user is in the preset scenario includes: determining that the user is in a first travel location, where the first travel location is any one of an airport, a railway station, a high-speed railway station, a bus station, a subway station, a bus stop, a highway entrance/exit, or a dock; and when the first travel location is not a habitual activity location of the user, determining that the user is in the travel scenario.

In the foregoing method, when determining that the user is in the travel scenario, the electronic device indicates the buffered application data by using the second information, to accurately inform the user that subsequently, even if the user in the travel scenario may pass through the area with weak network coverage or the area without network coverage, the user can also normally use the buffered application data indicated by the second information, which effectively improves user experience.

According to a third aspect, this application provides an application optimization method, applied to an electronic device, where the method includes: receiving compressed content of a first message sent by a network device; obtaining original content of the first message from the network device, and storing the original content of the first message in a first buffer of the electronic device; receiving a user operation for the first message; obtaining the original content of the first message from the first buffer in response to the user operation; and displaying the first message based on the original content of the first message.

In the foregoing method, before receiving the user operation for the first message, the electronic device may obtain the original content of the first message from the network device, and store the original content in the local first buffer. When subsequently receiving the user operation, the electronic device may directly obtain the original content of the first message from the first buffer for display. In this way, even if the electronic device cannot obtain the original content of the first message from the network device when subsequently receiving the user operation, the electronic device can normally obtain and display the original content of the first message, thereby effectively improving user experience.

In a possible implementation, the obtaining original content of the first message from the network device includes: obtaining the original content of the first message from the network device when determining that a user is in a preset scenario.

In a possible implementation, the preset scenario is a travel scenario, and the determining that a user is in a preset scenario includes: determining that the user is in a first travel location, where the first travel location is any one of an airport, a railway station, a high-speed railway station, a bus station, a subway station, a bus stop, a highway entrance/exit, or a dock; and when the first travel location is not a habitual activity location of the user, determining that the user is in the travel scenario.

In the foregoing method, when determining that the user is in the travel scenario, the electronic device may obtain the original content of the first message from the network device, and even if the user in the travel scenario performs the user operation for the first message when passing through an area with weak network coverage or the area without network coverage, the electronic device can normally obtain and display the original content of the first message, thereby effectively improving user experience.

In a possible implementation, the first message is determined according to a preset rule, and a parameter involved the preset rule includes at least one of a travel location in the preset scenario when being the travel scenario, predicted duration of being in an area with weak network coverage or the area without network coverage in the preset scenario, a chat time, a chat frequency, a type of a chat message, or a size of a chat message.

In the foregoing method, the electronic device may receive compressed content of a plurality of messages, and the first message may be determined by the electronic device from the plurality of messages according to the preset rule. In other words, the electronic device does not download all messages locally, but selectively locally downloads some predicted messages that are more likely to be viewed by the user subsequently. This ensures user experience, reduces storage load and communication load of a device, and reduces power consumption.

In a possible implementation, the method further includes: deleting original content of a second message in the first buffer when storage duration of the original content of the second message in the first buffer is greater than or equal to preset duration.

In the foregoing method, a "timeout deletion" mechanism is performed on a message stored in the first buffer, so that the first buffer can buffer a message that is "updated" and "more meets a user requirement" for viewing, thereby further improving user experience.

According to a fourth aspect, this application provides an application optimization method, applied to an electronic device, where the method includes: obtaining offline data when determining that a user is in a preset scenario; and displaying first content based on the offline data, where the offline data is video data buffered by a first application based on a second queue, the first application is used to buffer data of a first video and play the first video based on a first queue, and the first content is a video played based on the offline data when frame freezing occurs during video playback based on the first queue; or the offline data is application data of at least one application that is buffered when it is predicted that the user is in the preset scenario within first duration, and the first content indicates buffered application data of the at least one application; or the offline data is original content of a first message that is obtained from a network device after compressed content of the first message is received, a first buffer of the electronic device is configured to store the offline data, and the first content is the first message displayed based on the offline data in the first buffer when a user operation for the first message is received.

In the foregoing method, the electronic device may obtain the offline data when determining that the user is in the preset scenario. Subsequently, even if the electronic device cannot obtain online data used to display the first content, the electronic device may display the first content based on the offline data, thereby effectively improving user experience. In addition, there are various cases of the offline data and the first content (for example, the offline data may be previously buffered, or may be currently buffered), which can be greatly applied to different application scenarios, and therefore, universality is relatively high.

In a possible implementation, the preset scenario is a travel scenario, and the determining that a user is in a preset scenario includes: determining that the user is in a first travel location, where the first travel location is any one of an airport, a railway station, a high-speed railway station, a bus station, a subway station, a bus stop, a highway entrance/exit, or a dock; and when the first travel location is not a habitual activity location of the user, determining that the user is in the travel scenario.

In the foregoing method, the electronic device may obtain the offline data when determining that the user is in the travel scenario. Even if the user in the travel scenario may pass through an area with weak network coverage or the area without network coverage, and consequently the electronic device cannot obtain the online data used to display the first content, the electronic device may display the first content based on the offline data, thereby effectively improving user experience.

In a possible implementation, the obtaining offline data includes: buffering the video data based on the second queue.

In the foregoing method, the electronic device may buffer an online video based on a first buffer queue, and buffer an offline video based on a second buffer queue. When frame freezing occurs during playback of the online video, the offline video may be played. In this way, playback and downloading of the online video are not affected when the offline video is downloaded, and user experience in watching videos is effectively improved.

In a possible implementation, the method further includes: displaying first information when determining that the user is in the preset scenario, where the first information is used to prompt the user to buffer an offline video, or the first information indicates that an offline video is being buffered currently.

In the foregoing method, the electronic device may display the first information when determining that the user is in the preset scenario, to prompt the user to buffer the offline video or inform the user that the offline video is being buffered currently, so that the user is aware of a buffering status of video data, which further improves user experience.

In a possible implementation, the second queue includes a short-term queue and a long-term queue, a quantity of the short-term queue is less than a quantity of the long-term queue, and a buffering priority of the short-term queue is higher than a buffering priority of the long-term queue; and the displaying first content based on the offline data includes: when duration of frame freezing during video playback based on the first queue is less than or equal to first duration, displaying the first content based on offline data in the short-term queue included in the second queue; or when duration of frame freezing during video playback based on the first queue is greater than or equal to second duration, displaying the first content based on offline data in the long-term queue included in the second queue, where the first duration is the same as or different from the second duration.

In the foregoing method, because a case in which playback frame freezing duration is relatively short frequently occurs and in this case, a relatively small amount of video data is required, a video is played based on the short-term queue with a relatively small quantity of queues and a relatively high buffering priority; and because a case in which playback frame freezing duration is relatively long seldom occurs and in this case, a relatively large amount of video data is required, the video is played based on the long-term queue with a relatively large quantity of queues and a relatively low buffering priority. In other words, buffering and playback are controlled based on different service scenarios, for improving device resource utilization and product availability.

In a possible implementation, the method further includes: displaying second information when displaying the first content based on the offline data, where the second information indicates that the first content is an offline video.

In the foregoing method, when playing the offline data in the second queue, the electronic device may display the second information, to inform the user that the currently played video is the offline video, so that the user is aware of a playback status of the video, which further improves user experience.

In some embodiments, the method further includes: displaying second information when the first content is displayed based on the offline data in the long-term queue, where the second information indicates that the first content is an offline video.

In the foregoing method, when the video is played based on the short-term queue, the second information may not be displayed, so that the user is unaware of impact of short-term frame freezing on video playback as much as possible. When the video is played based on the long-term queue, the second information may be displayed, so that the user is aware of long-term frame freezing and a playback status of the video. In this way, different display manners are used for different cases, to better meet actual requirements of the user, thereby further improving user experience.

In a possible implementation, the preset scenario is the travel scenario, and the method further includes: releasing the second queue when determining that the user arrives at a destination in the travel scenario.

In the foregoing method, when it is determined that the user arrives at the destination in the travel scenario, it may be considered that frame freezing during playback of the online video hardly occurs subsequently. Therefore, the second queue is released. This ensures user experience in watching videos, and further saves device resources and reduces device power consumption.

In a possible implementation, the method further includes: deleting a second video from the second queue when storage duration of the second video that is buffered in the second queue is greater than or equal to fourth duration.

In the foregoing method, a "timeout deletion" mechanism is performed on video data stored in the second queue, so that the second queue can buffer an offline video that is "updated" and that "more meets a user requirement" for playing, thereby further improving user experience.

In a possible implementation, the preset scenario is a travel scenario, and the predicting that the user is in the preset scenario within first duration includes: obtaining first travel information of the user; and when a difference between a current time and a departure time in the first travel information is less than or equal to the first duration, predicting that the user is in the travel scenario within the first duration.

In the foregoing method, when predicting that the user is about to be in the travel scenario, the electronic device may buffer the offline data, and when determining that the user is in the travel scenario, the electronic device may indicate the buffered application data (namely, the offline data) by using the first content, to accurately prompt the user. Therefore, convenience and probability of using the buffered application data by the user in the travel scenario are improved, and product functions better meet user requirements. In addition, even if the user in the travel scenario may pass through an area with weak network coverage or an area without network coverage, the user can normally use the buffered application data, which effectively improves user experience.

In a possible implementation, the first travel information is travel information with an earliest travel time in travel information of the user.

In the foregoing method, the first travel information is information about a latest travel that is not made, and it is more accurate and reliable to predict, based on the first travel information, whether the user is about to be in the travel scenario.

In a possible implementation, the first message is determined according to a preset rule, and a parameter involved the preset rule includes at least one of a travel location in the preset scenario when being the travel scenario, predicted duration of being in an area with weak network coverage or an area without network coverage in the preset scenario, a chat time, a chat frequency, a type of a chat message, or a size of a chat message.

In the foregoing method, before receiving the user operation for the first message, the electronic device may obtain the original content of the first message (namely, the offline data) from the network device, and store the original content in the local first buffer. When subsequently receiving the user operation, the electronic device may directly obtain the original content of the first message from the first buffer and display the first content. In this way, even if the electronic device cannot obtain the original content of the first message from the network device when subsequently receiving the user operation, the electronic device can normally obtain and display the original content of the first message, thereby effectively improving user experience. In addition, the electronic device may receive compressed content of a plurality of messages, and the first message may be determined by the electronic device from the plurality of messages according to the preset rule. In other words, the electronic device does not download all messages locally, but selectively locally downloads some predicted messages that are more likely to be viewed by the user subsequently. This ensures user experience and reduces storage load and communication load of a device.

In a possible implementation, the method further includes: deleting original content of a second message in the first buffer when storage duration of the original content of the second message in the first buffer is greater than or equal to fifth duration.

In the foregoing method, a "timeout deletion" mechanism is performed on a message stored in the first buffer, so that the first buffer can buffer a message that is "updated" and "more meets a user requirement" for viewing, thereby further improving user experience.

According to a fifth aspect, this application provides an electronic device, including one or more processors and one or more memories, where the one or more memories are coupled to the one or more processors, the one or more memories are configured to store computer program code, the computer program code includes computer instructions, and when the one or more processors execute the computer instructions, the electronic device is enabled to perform the application optimization method according to any one of the implementations of the first aspect in embodiments of this application.

According to a sixth aspect, this application provides a computer storage medium, including computer instructions. When the computer instructions are run on an electronic device, the electronic device is enabled to perform the application optimization method according to any one of the implementations of the first aspect in embodiments of this application.

According to a seventh aspect, this application provides a computer program product. When the computer program product runs on an electronic device, the electronic device is enabled to perform the application optimization method according to any one of the implementations of the first aspect in embodiments of this application.

According to an eighth aspect, this application provides an electronic device, including one or more functional modules, where the one or more functional modules are used for the application optimization method according to any implementation of the first aspect in embodiments of this application.

According to a ninth aspect, an embodiment of this application provides an electronic device. The electronic device includes the method or apparatus for performing any embodiment of this application. For example, the electronic device is a chip.

It should be understood that descriptions of technical features, technical solutions, beneficial effects, or similar languages in this application do not imply that all features and advantages can be implemented in any single embodiment. On the contrary, it may be understood that descriptions of features or beneficial effects indicate that at least one embodiment includes specific technical features, technical solutions, or beneficial effects. Therefore, descriptions of technical features, technical solutions, or beneficial effects in this specification do not necessarily refer to a same embodiment. Further, the technical features, technical solutions, and beneficial effects described in embodiments may be combined in any proper manner. Persons skilled in the art may understand that an embodiment may be implemented without one or more specific technical features or technical solutions, or beneficial effect in a specific embodiment. In other embodiments, additional technical features and beneficial effects may also be identified in specific embodiments that do not reflect all embodiments.

### BRIEF DESCRIPTION OF DRAWINGS

The following describes accompanying drawings used in embodiments of this application.
FIG. 1 is a diagram of a hardware structure of an electronic device according to an embodiment of this application;
FIG. 2 is a diagram of a software architecture of an electronic device according to an embodiment of this application;
FIG. 3A to FIG. 3D are diagrams of some user interfaces of a video application according to an embodiment of this application;
FIG. 4A to FIG. 4E are diagrams of some user interfaces of a short video application according to an embodiment of this application;
FIG. 5A to FIG. 5D are diagrams of some user interfaces of a leftmost screen application according to an embodiment of this application;
FIG. 6A to FIG. 6D are diagrams of some user interfaces of an instant messaging application according to an embodiment of this application;
FIG. 7 is a schematic flowchart of an application optimization method according to an embodiment of this application;
FIG. 8 and FIG. 9 are diagrams of architectures of some application optimization systems according to an embodiment of this application;
FIG. 10 is a schematic flowchart of another application optimization method according to an embodiment of this application;
FIG. 11 is a diagram of an architecture of another application optimization system according to an embodiment of this application;
FIG. 12 is a diagram of an architecture of a communication system according to an embodiment of this application;
FIG. 13 is a schematic flowchart of another application optimization method according to an embodiment of this application;
FIG. 14 is a diagram of an architecture of another application optimization system according to an embodiment of this application;
FIG. 15 is a diagram of a software structure of an electronic device according to an embodiment of this application;
FIG. 16 is a diagram of another software structure of an electronic device according to an embodiment of this application; and
FIG. 17 is a diagram of another software structure of an electronic device according to an embodiment of this application.

### DESCRIPTION OF EMBODIMENTS

The following describes technical solutions of embodiments in this application with reference to the accompanying drawings. In the descriptions of embodiments of this application, unless otherwise specified, "/" indicates "or". For example, A/B may indicate A or B. In this specification, "and/or" merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

Embodiments of this application provide an application optimization method, and the method may be applied to an electronic device. The electronic device may notify an application of an indication that a user is going to travel, and the application may execute a corresponding optimization strategy based on the indication, for example, buffer application data, or prompt the user to use previously buffered application data.

In this application, the application is used as an example for description. However, during specific implementation, the application may alternatively be replaced with an applet or a software module in another form. This is not limited in this application.

In this application, the electronic device may be a mobile phone, a tablet computer, a desktop computer, a laptop computer, a handheld computer, a notebook computer, an ultra-mobile personal computer (ultra-mobile personal computer, UMPC), a netbook computer, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device, and a specific type of the electronic device is not specifically limited in embodiments of this application.

The following describes an example of an electronic device 100 provided in embodiments of this application.

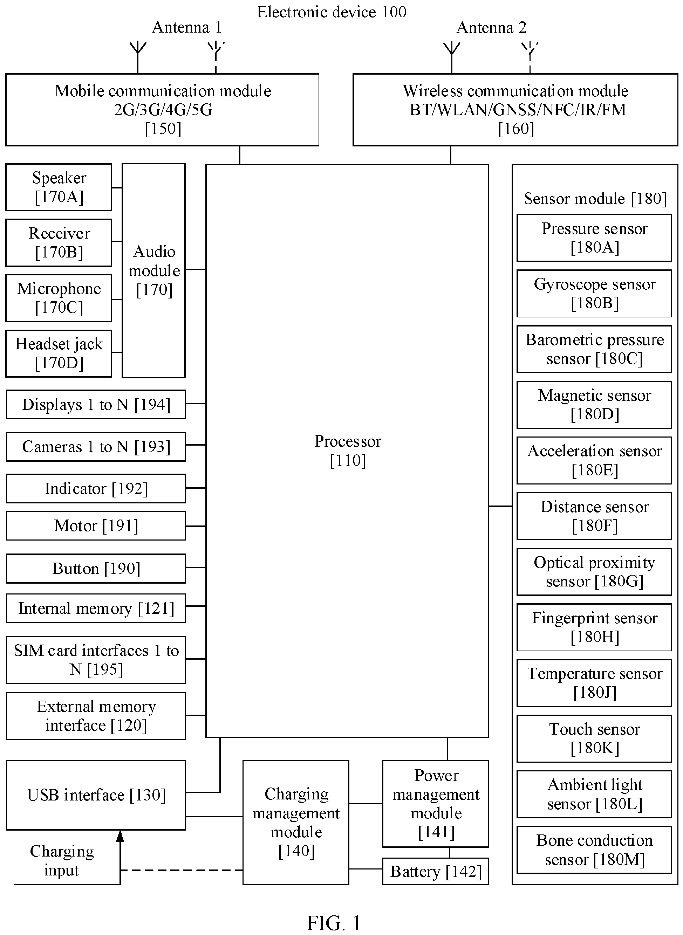

FIG. 1 is an example of a diagram of a hardware structure of the electronic device 100.

It should be understood that the electronic device 100 shown in FIG. 1 is merely an example, and the electronic device 100 may have more or fewer components than those shown in FIG. 1, or may have two or more components that are combined, or may have different component configurations. Various components shown in FIG. 1 may be implemented in hardware including one or more signal processing circuits and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger.

The power management module 141 is configured to connect the battery 142 and the charging management module 140 to the processor 110. The power management module 141 receives an input of the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle quantity, and a battery health status (electric leakage and impedance). In some other embodiments, the power management module 141 may alternatively be disposed in the processor 110. In some other embodiments, the power management module 141 and the charging management module 140 may be alternatively disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in the same component with the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function by using the GPU, the display 194, the application processor, and the like, for example, display web page content. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). The display panel may be further an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, a ray of light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, brightness, and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected to the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal. In addition to the digital image signal, the digital signal processor may further process another digital signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100, for example, image recognition, facial recognition, speech recognition, and text understanding, can be implemented through the NPU.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 runs the instructions stored in the internal memory 121 to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and a phone book) created during use of the electronic device 100, and the like. In addition, the internal memory 121 may include a high-speed random access memory, and may further include a nonvolatile memory, for example, at least one magnetic disk storage device, a flash storage device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode audio signals.

The speaker 170A, also referred to as a "loudspeaker", is configured to convert an audio electrical signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a change of the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B.

The barometric pressure sensor 180C is configured to measure barometric pressure.

The magnetic sensor 180D includes a Hall sensor. The electronic device 100 may detect opening and closing of a flip cover by using the magnetic sensor 180D.

The acceleration sensor 180E may detect accelerations in various directions (usually on three axes) of the electronic device 100. When the electronic device 100 is still, magnitude and a direction of gravity may be detected. The acceleration sensor 180E may be further configured to recognize a posture of the electronic device, and is used in screen switching between a landscape mode and a portrait mode, a pedometer, or another application.

The distance sensor 180F is configured to measure a distance. The electronic device 100 may measure the distance by using infrared light or a laser.

The optical proximity sensor 180G may include, for example, a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, the electronic device 100 may determine that there is an object near the electronic device 100. When insufficient reflected light is detected, the electronic device 100 may determine that there is no object near the electronic device 100.

The ambient light sensor 180L is configured to sense ambient light brightness.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. Visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

A software system of the electronic device 100 may use a layered architecture, an event-driven architecture, a microkernel architecture, a micro service architecture, or a cloud architecture. For example, a software system of the layered architecture may be an Android (Android) system, or may be a Harmony (Harmony) operating system (operating system, OS), or another software system. In embodiments of this application, the Android system of the layered architecture is used as an example to describe the software structure of the electronic device 100.

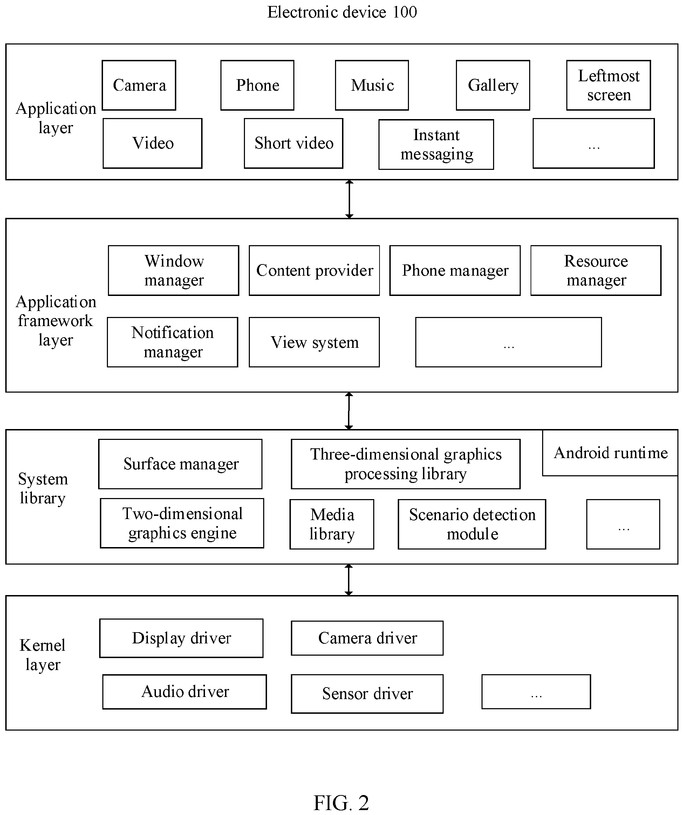

FIG. 2 shows an example of a diagram of a software architecture of the electronic device 100.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application package may include applications such as Camera, Phone, Music, Gallery, Leftmost screen, Video, Short video, and Instant messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is prompted in the status bar, a prompt tone is produced, the electronic device vibrates, or an indicator light blinks.

The Android runtime includes a kernel library and a virtual machine. The Android runtime is responsible for scheduling and management of the Android system.

The kernel library includes two parts: One part is a performance function that needs to be invoked by the Java language, and the other part is an Android kernel library.

The application layer and the application framework layer run in the virtual machine. The virtual machine executes Java files at the application layer and the application framework layer as binary files. The virtual machine is configured to perform functions such as object life cycle management, stack management, thread management, security and exception management, and garbage collection.

The system library may include a plurality of functional modules, for example, a surface manager (surface manager), a media library (Media Library), a three-dimensional graphics processing library (for example, OpenGL ES), a 2D graphics engine (for example, SGL), and a scenario detection module.

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The scenario detection module is configured to recognize whether a user is going to travel/whether a user is in a travel scenario.

In some embodiments, the scenario detection module recognizes, by using but not limited to a signal fingerprint, a fence, a cell (cell) identity, a GPS, or the like, whether the user is in a preset location. The preset location includes, for example, but is not limited to, an airport, a railway station/high-speed railway station, a bus station, a subway station, a bus stop, a highway entrance/exit, a dock, or a city-town/city-country junction. The fence may be a fence in the preset location. For example, the fence is a gate of the airport or the railway station/high-speed railway station. The signal fingerprint may be used to recognize a location in which the signal fingerprint is collected, for example, an indoor location. The signal fingerprint includes, for example, a signal identifier (an identifier of a signal source in an indoor environment, for example, identification information of a Wi-Fi signal: a service set identifier (service set identifier, SSID)), and signal strength (for example, signal strength of a Wi-Fi signal: a received signal strength indication (received signal strength indication, RSSI). A shorter distance between the electronic device 100 and the signal source indicates stronger corresponding signal strength).

When the user is in the preset location, the scenario detection module may screen out, by using a decision tree with reference to a habitual activity location of the user, a case in which the preset location is not the habitual activity location (for example, remove a case in which the user is a staff member in the preset location), to determine (when the case is screened out) that the user is going to travel/the user is in the travel scenario. For example, the scenario detection module may preset a signal fingerprint of the habitual activity location of the user. When the signal fingerprint of the preset location is different from the signal fingerprint of the habitual activity location, it may represent that the preset location is not the habitual activity location.

In some embodiments, when recognizing that the user is going to travel/the user is in the travel scenario, the scenario detection module may send an indication of the travel user to at least one application at the application layer by using the application framework layer. Optionally, the indication may further include a travel location in which the travel user is located currently, and the travel location is the foregoing determined preset location in which the user is located.

The kernel layer is a layer between hardware and software. The kernel layer includes at least a display driver, a camera driver, an audio driver, and a sensor driver.

The following describes an example of a working procedure of software and hardware of the electronic device 100 with reference to a use scenario of a short video application.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a touch tap operation, and a control corresponding to the tap operation is an icon of a short video application. The short video application invokes an interface of the application framework layer to start the short video application, invokes the kernel layer to start the display driver and the audio driver, and then plays a video on a home page of the short video application through the display 194 and the audio module 170.

The following describes, by using examples, user interface embodiments in embodiments of this application.

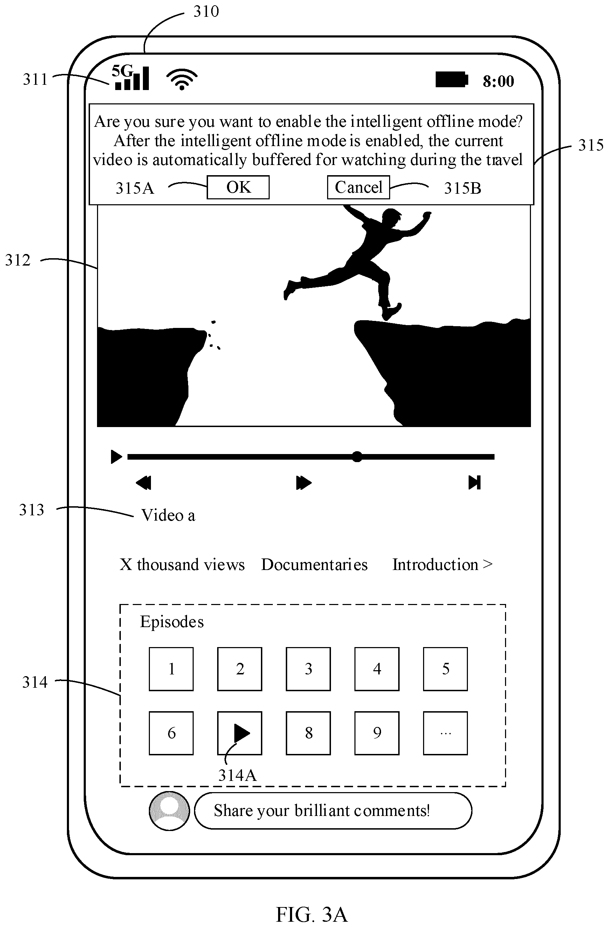

FIG. 3A to FIG. 3D show examples of diagrams of user interfaces of a video application.

In some embodiments, in a process in which a user plays a video by using a video application of the electronic device 100, if the video application obtains an indication that the user is going to travel, the video application may prompt the user to enable an intelligent offline mode. For example, the electronic device 100 may display a user interface 310 shown in FIG. 3A.

As shown in FIG. 3A, the user interface 310 may include a signal identifier 311. The signal identifier 311 indicates that the electronic device 100 currently accesses a 5G network with five signal bars (namely, full signal bars) and accesses a Wi-Fi network. The user interface 310 may include a playback box 312, a name 313, and episode selection information 314. The playback box 312 is configured to display an image of the video, the name 313 indicates a name of the currently played video: "Video a", and the episode selection information 314 is used to display a specific episode quantity of the "Video a". A playback identifier 314A in the episode selection information 314 indicates that the seventh episode of the "Video a" is specifically played currently.

As shown in FIG. 3A, the user interface 310 further includes prompt information 315. The prompt information 315 may include characters " Are you sure you want to enable the intelligent offline mode? After the intelligent offline mode is enabled, the current video is automatically buffered for watching during the travel", to prompt the user to enable the intelligent offline mode. The prompt information 315 further includes an OK control 315A and a cancel control 315B. The OK control 315A is configured to enable the intelligent offline mode, and the cancel control 315B is configured to cancel enabling of the intelligent offline mode. In some embodiments, after the intelligent offline mode is enabled, the video application may buffer video data of the currently played "Video a". Optionally, the video application may buffer the seventh episode and subsequent N episodes of the currently played "Video a", where N is a non-negative integer. The following example is described by using an example in which the video application buffers the seventh episode and the eighth episode (that is, N is 1) of the "Video a".

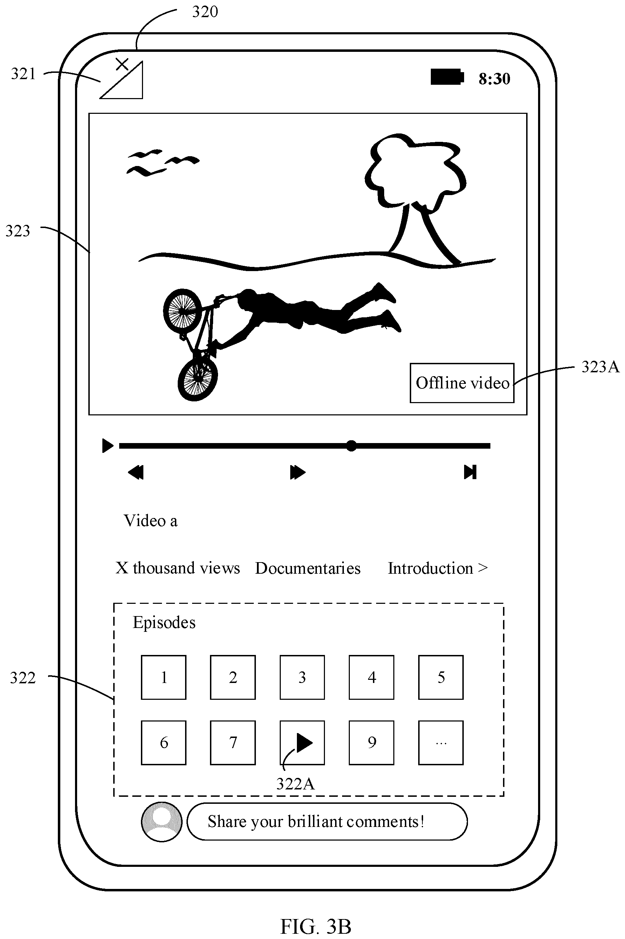

In some embodiments, after the embodiment (where the video application buffers the seventh episode and the eighth episode of the "Video a") shown in FIG. 3A, when the electronic device 100 is in a scenario without network coverage (for example, the user takes a plane) or a scenario with weak network coverage (for example, the user takes a high-speed railway to pass through a tunnel or the user travels in the wilderness), the user may continue to play the video by using the video application of the electronic device 100. For example, the electronic device 100 may display a user interface 320 shown in FIG. 3B.

As shown in FIG. 3B, the user interface 320 is similar to the user interface 310 shown in FIG. 3A, and a difference lies in that a signal identifier 321 on the user interface 320 indicates that the electronic device 100 currently cannot access a network, that is, the electronic device 100 is in the scenario without network coverage. In addition, on the user interface 320, a playback identifier 322Ain episode selection information 322 indicates that the eighth episode of the "Video a" is specifically played currently. A playback box 323 on the user interface 320 further includes a video identifier 323A. The video identifier 323A indicates that a currently played video (namely, the eighth episode of the "Video a") is an offline video. In this way, the user can watch the video normally even in the scenario without network coverage. This improves user experience.

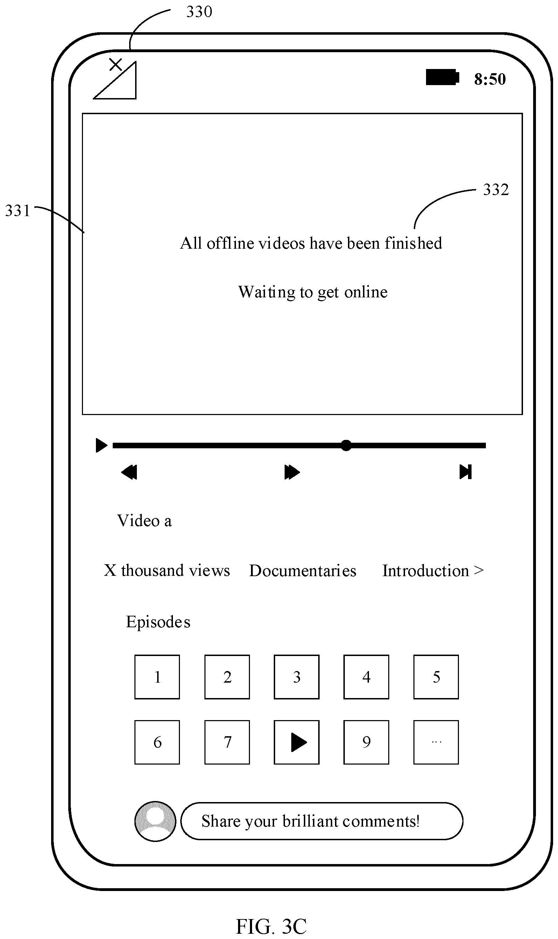

In some embodiments, after the embodiment shown in FIG. 3B, when the buffered seventh episode and eighth episode of the "Video a" have been finished, and the electronic device 100 is still in the scenario without network coverage, the electronic device 100 may prompt the user that all offline videos have been finished. For example, the electronic device 100 may display a user interface 330 shown in FIG. 3C.

As shown in FIG. 3C, the user interface 330 is similar to the user interface 320 shown in FIG. 3B, and a difference lies in that a playback box 331 on the user interface 330 does not display an image of the video, but includes prompt information 322. The prompt information 322 includes characters "All offline videos have been finished. Waiting to get online".

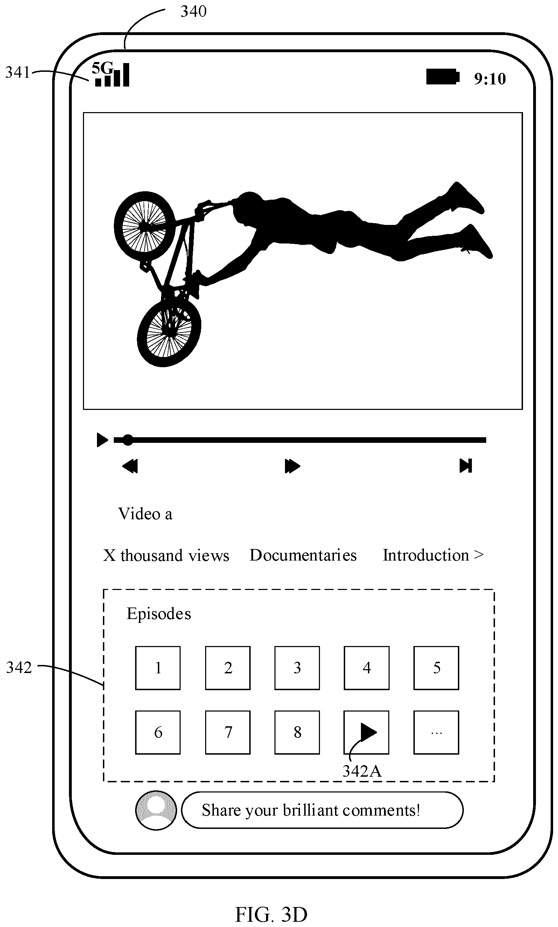

In some embodiments, after the embodiment shown in FIG. 3B or FIG. 3C, when the network of the electronic device 100 is recovered (for example, the user arrives at a travel destination), the user may normally play an online video by using the video application. For example, the electronic device 100 may display a user interface 340 shown in FIG. 3D.

As shown in FIG. 3D, the user interface 340 is similar to the user interface 310 shown in FIG. 3A. A signal identifier 341 on the user interface 340 indicates that the electronic device 100 currently accesses a 5G network with five signal bars (namely, full signal bars), but does not access a Wi-Fi network. However, played videos are different. On the user interface 340, a playback identifier 342A in episode selection information 342 indicates that the ninth episode of the "Video a" is specifically played currently, that is, video content after the buffered seventh episode and eighth episode of the "Video a" is specifically played currently.

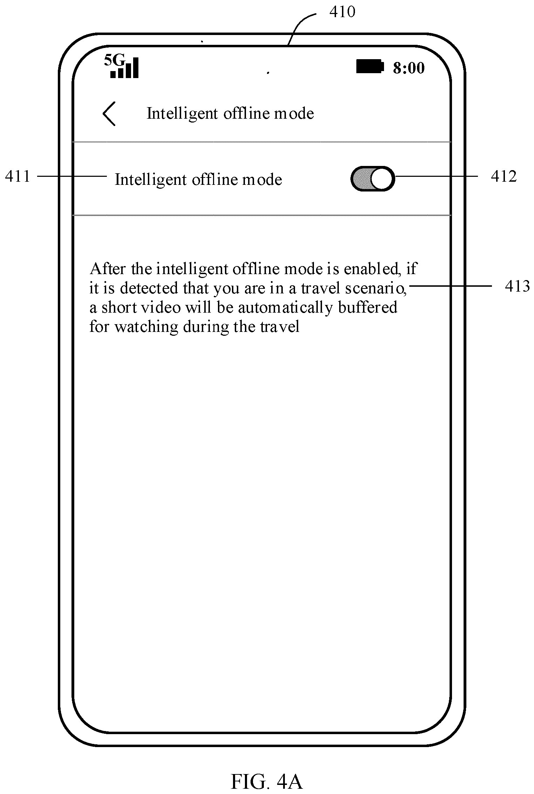

FIG. 4A to FIG. 4E show examples of diagrams of user interfaces of a short video application.

In some embodiments, a user may enable an intelligent offline mode by using a setting function of a short video application of the electronic device 100. For example, the electronic device 100 may display a user interface 410 shown in FIG. 4A.

As shown in FIG. 4A, the user interface 410 may be a setting interface of the short video application. The user interface 410 may include a setting name 411, a setting switch 412, and a setting description 413. The setting name 411 may indicate a name of a currently set function: "Intelligent offline mode", the setting switch 412 may be configured to enable or disable the function, and the setting description 413 may include a description of the function, for example, "After the intelligent offline mode is enabled, if it is detected that you are in a travel scenario, a short video will be automatically buffered for watching during the travel". The setting switch 412 on the user interface 410 is in an enabled state, which represents that the function "Intelligent offline mode" is enabled.

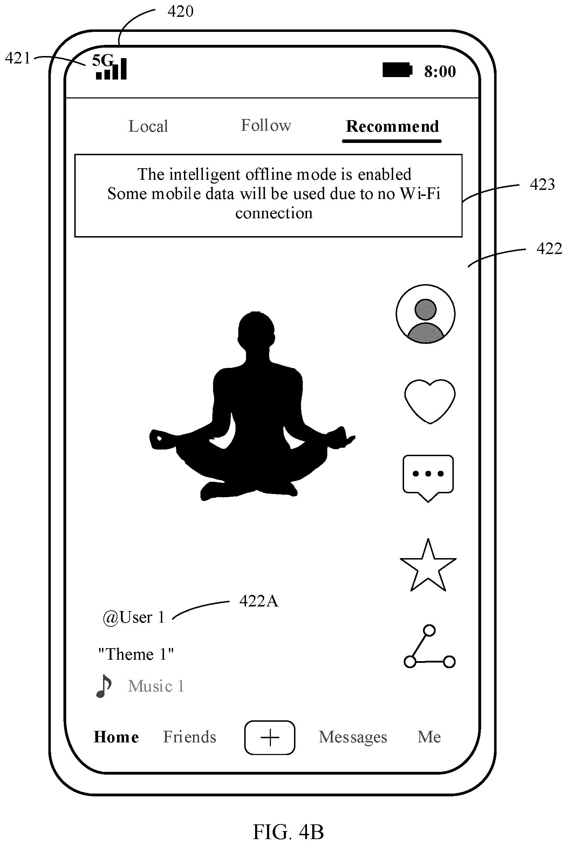

In some embodiments, after the embodiment shown in FIG. 4A, in a process in which the user plays a short video by using the short video application, if the short video application obtains an indication that the user is going to travel, the short video application may automatically buffer the short video, and prompt the user that the intelligent offline mode is currently enabled. For example, the electronic device 100 may display a user interface 420 shown in FIG. 4B.

As shown in FIG. 4B, the user interface 420 may include a signal identifier 421. The signal identifier 421 indicates that the electronic device 100 currently accesses a 5G network with five signal bars (namely, full signal bars). The user interface 420 further includes a playback interface 422 of a short video. The playback interface 422 may include identification information 422A of a currently played short video 1. The identification information 422A may include a publisher ("User 1"), a title ("Theme 1"), and background music ("Music 1") of the short video 1. The user interface 420 further includes prompt information 423. The prompt information 423 may include characters "The intelligent offline mode is enabled. Some mobile data will be used due to no Wi-Fi connection", indicating that the intelligent offline mode is enabled and the short video is being buffered currently by using a cellular network (namely, the foregoing 5G network).

In some embodiments, after obtaining the indication that the user is going to travel, the short video application may buffer the currently played short video 1 and the other N short videos, where N is a non-negative integer. The N short videos are, for example, N short videos after the short video 1 in a normal watching order of the user. A short video after the short video 1 in the normal watching order of the user may be a next short video that is displayed by the electronic device 100 in response to one user operation of sliding from bottom to top when the user interface 420 is displayed. The following example is described by using an example in which the short video application buffers the short video 1 and a short video 2 (that is, N is 1).

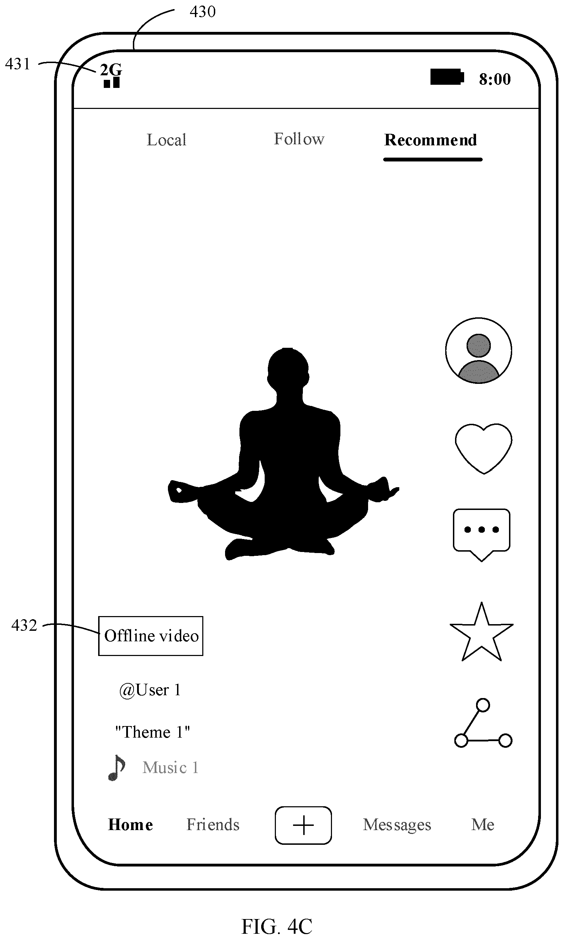

In some embodiments, after the short video application buffers the short video 1 and the short video 2, it is assumed that the electronic device 100 is in a scenario without network coverage or a scenario with weak network coverage before the short video 1 on the user interface 420 shown in FIG. 4B has been finished. In this case, the electronic device 100 may play the buffered short video 1 for the user. For example, the electronic device 100 may display a user interface 430 shown in FIG. 4C.

As shown in FIG. 4C, the user interface 430 is similar to the user interface 420 shown in FIG. 4B, and a difference lies in that a signal identifier 431 on the user interface 430 indicates that the electronic device 100 currently accesses a 2G network with two signal bars, that is, the electronic device 100 is in the scenario with weak network coverage. In addition, the user interface 430 further includes identification information 432. The identification information 432 indicates that the currently played short video 1 is an offline video. In this way, the user can watch short videos normally even in the scenario with weak network coverage. This improves user experience.

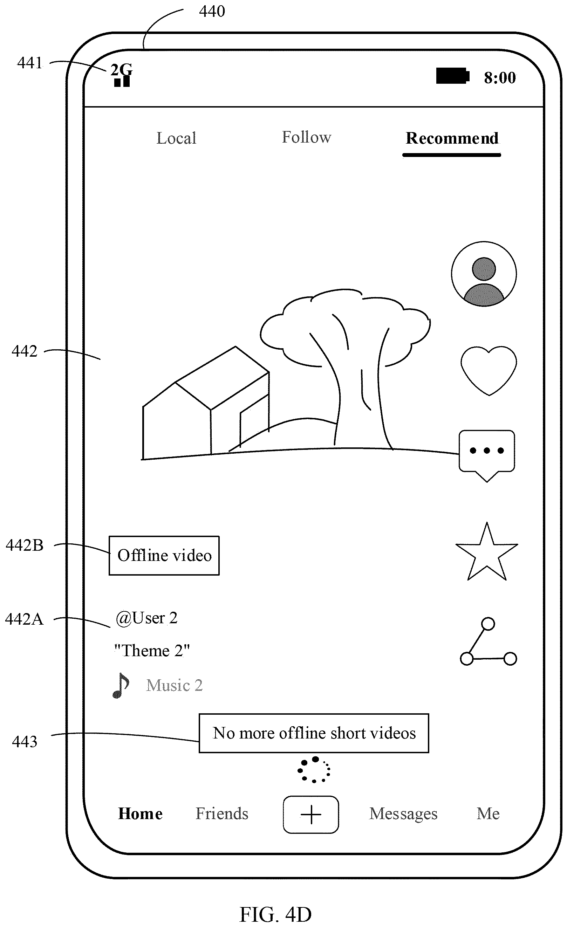

In some embodiments, after the embodiment shown in FIG. 4C, the electronic device 100 is in the scenario without network coverage or the scenario with weak network coverage. If the electronic device 100 receives a user operation (for example, a user operation of sliding from bottom to top) used to trigger watching of a next short video when playing the last buffered short video 2, the electronic device 100 may prompt the user that there is no other offline short video that can be played. For example, the electronic device 100 may display a user interface 440 shown in FIG. 4D.

As shown in FIG. 4D, the user interface 440 may include a signal identifier 441, a playback interface 442 of a short video, and prompt information 443. The signal identifier 441 indicates that the electronic device 100 currently accesses a 2G network with two signal bars, that is, the electronic device 100 is in the scenario with weak network coverage. The playback interface 442 may include identification information 442A and identification information 442B of the currently played short video 2. The identification information 442Amay include a publisher ("User 2"), a title ("Theme 2"), and background music ("Music 2") of the short video 2. The identification information 442B indicates that the currently played short video 2 is an offline video. The prompt information 443 may include characters "No more offline short videos", and is used to prompt the user that there is no other offline short video that can be played currently.

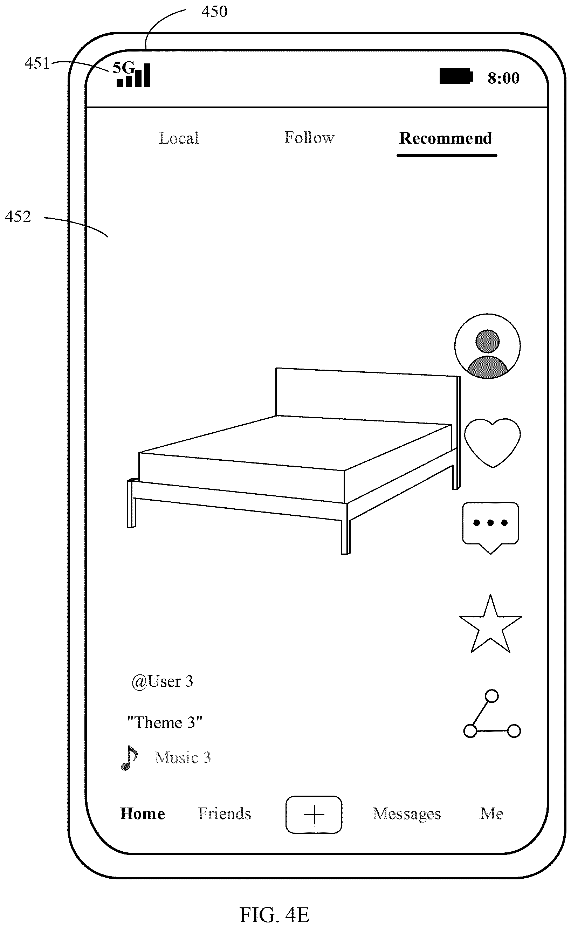

In some embodiments, after the embodiment shown in FIG. 4C or FIG. 4D, when the network of the electronic device 100 is recovered, the user may normally play an online short video by using the short video application. For example, the electronic device 100 may display a user interface 450 shown in FIG. 4E.

As shown in FIG. 4E, the user interface 450 is similar to the user interface 420 shown in FIG. 4B. A signal identifier 451 on the user interface 450 also indicates that the electronic device 100 currently accesses a 5G network with five signal bars (namely, full signal bars). However, played short videos are different. On the user interface 450, the short video playback interface 452 is configured to play an online short video 3.

In the foregoing embodiments, after obtaining the indication that the user is going to travel, the video application prompts the user to enable the intelligent offline mode. Based on the intelligent offline mode enabled by the user in advance, when obtaining the indication that the user is going to travel, the short video application works directly in the intelligent offline mode. During specific implementation, any application may use, but is not limited to, any one of the foregoing implementations to enable the intelligent offline mode. For specific examples, refer to the user interface embodiments of the video application and the short video application.

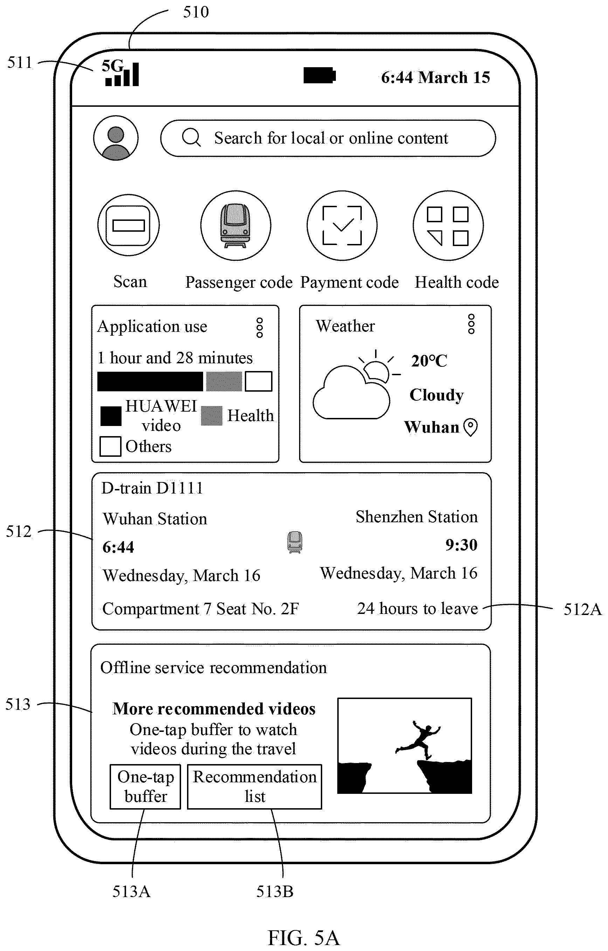

FIG. 5A to FIG. 5D show examples of diagrams of user interfaces of a leftmost screen.

In some embodiments, a leftmost screen application of the electronic device 100 may prompt, based on travel information of a user, the user to buffer application data before the user travels (for example, at a moment one day prior to a departure time in the travel information). For example, the electronic device 100 may display a user interface 510 shown in FIG. 5A.

As shown in FIG. 5A, the user interface 510 may include a signal identifier 511, a travel widget 512, and an offline recommendation widget 513. The signal identifier 511 indicates that the electronic device 100 currently accesses a 5G network with five signal bars. The travel widget 512 may indicate travel information of the user. The travel information may include: A departure time is 6:44 on March 16 (Wednesday), a transport means is a D-train numbered D1111, a departure station is Wuhan Station, and an arrival station is Shenzhen Station. The travel widget 512 may include indication information 512A. The indication information 512Amay indicate that duration between a current time and the departure time in the travel information is "24 hours". The offline recommendation widget 513 may include prompt information, for example, "Offline service recommendation", "More recommended videos", and "One-tap buffer to watch videos during the travel". The offline recommendation widget 513 further includes a buffer control 513A and a list control 513B. The buffer control 513A may be configured to trigger buffering of application data of at least one application. For example, the at least one application is N applications recently used by the user, where N is a positive integer; and the application data of the at least one application is application data recently viewed by the user and/or application data such as news and hotspot recommended by the application to the user. The list control 513B may be configured to trigger displaying of detailed information about application data that is recommended to be buffered. For example, the application data that is recommended to be buffered is the application data recently viewed by the user and/or the application data such as news and hotspot recommended by the application to the user.

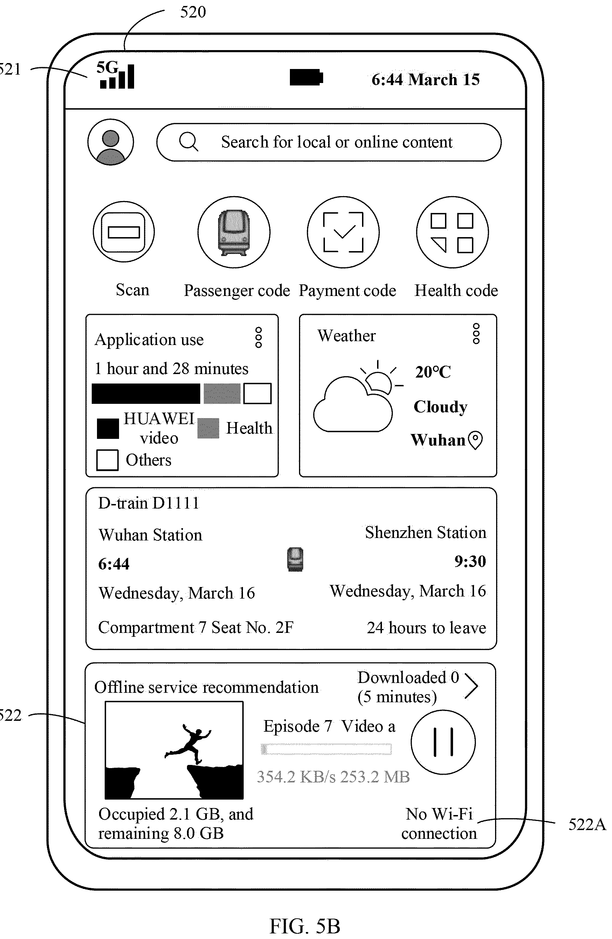

In some embodiments, the electronic device 100 may receive a user operation (for example, a tap operation) performed on the buffer control 513A on the user interface 510 shown in FIG. 5A, and in response to the user operation, buffer application data of at least one application, for example, buffer video data of a recently watched "Video a" in a video application. The electronic device 100 displays a user interface 520 shown in FIG. 5B.

As shown in FIG. 5B, the user interface 520 is similar to the user interface 510 shown in FIG. 5A, and a difference lies in different displayed content of an offline recommendation widget. A signal identifier 521 on the user interface 520 indicates that the electronic device 100 currently accesses a 5G network with five signal bars. An offline recommendation widget 522 on the user interface 520 is configured to display application data that is being buffered currently, namely, the seventh episode of the "Video a". The offline recommendation widget 522 further includes identification information 522A. The identification information 522A includes characters "No Wi-Fi connection", indicating that the application data is being buffered currently by using a cellular network (namely, the foregoing 5G network).

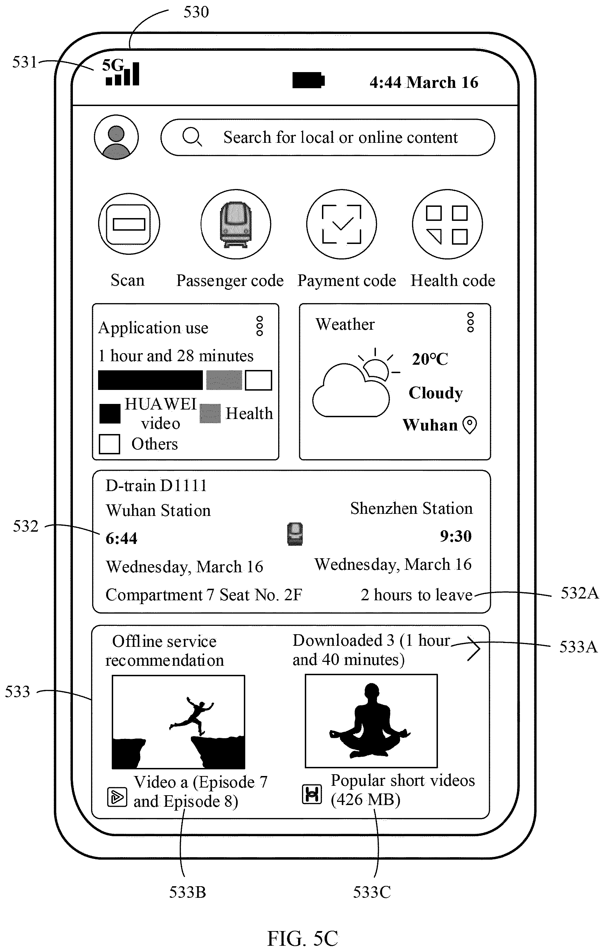

In some embodiments, after the electronic device 100 buffers the application data of the at least one application (for example, after the embodiment shown in FIG. 5B), if the leftmost screen application obtains an indication that the user is going to travel, the buffered application data may be displayed. For example, the electronic device 100 displays a user interface 530 shown in FIG. 5C.

As shown in FIG. 5C, the user interface 530 is similar to the user interface 510 shown in FIG. 5A, and a difference lies in different displayed content of a travel widget and an offline recommendation widget. A signal identifier 531 on the user interface 530 indicates that the electronic device 100 currently accesses a 5G network with five signal bars. On the user interface 530, indication information 532A in a travel widget 532 may indicate that duration between a current time and a departure time in travel information indicated by the travel widget 532 is "2 hours". The foregoing indication that the user is going to travel may be obtained when the user is in a D-train station. An offline recommendation widget 533 is configured to display buffered application data. The offline recommendation widget 533 includes download information 533A, application data 533B, and application data 533C. The download information 533A includes characters "Downloaded 3 (1 hour and 40 minutes)", indicating that three pieces of application data have been buffered and total duration for playing the three pieces of application data is 1 hour and 40 minutes. The three pieces of application data may include: application data (namely, video data in a video application: the seventh episode and the eighth episode of the "Video a") indicated by the application data 533B, and application data (namely, short video data in a short video application, where a total size of the short video data is 426 megabytes (Mbyte, MB)) indicated by the application data 533C. The user may obtain the buffered application data by using the offline recommendation widget 533, and watch the application data during the travel (for example, in a scenario without network coverage or a scenario with weak network coverage). Specific examples are similar to those in FIG. 3B and FIG. 3C, and FIG. 4C and FIG. 4D.

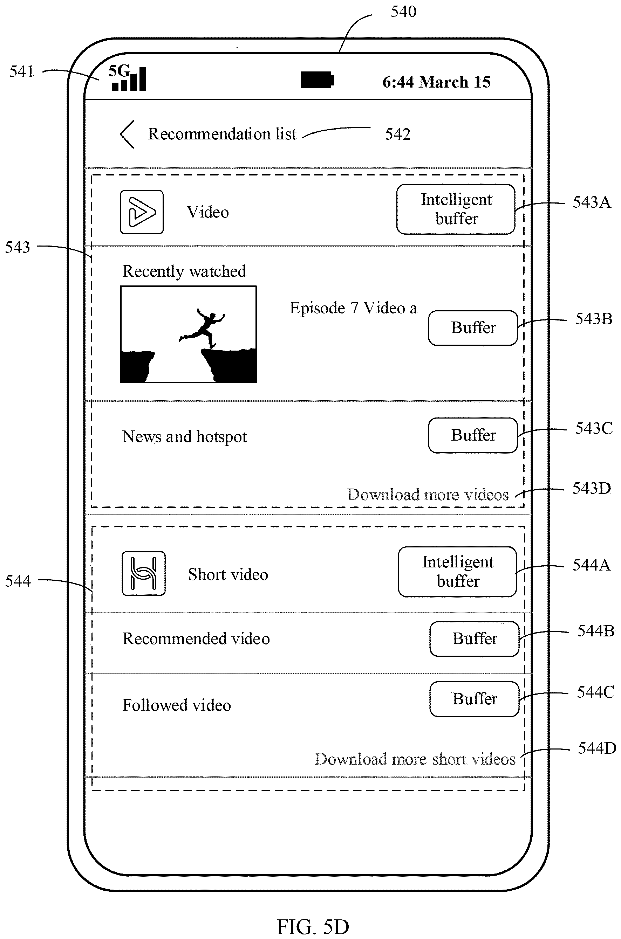

In some embodiments, the electronic device 100 may receive a user operation (for example, a tap operation) performed on the list control 513B on the user interface 510 shown in FIG. 5A, and in response to the user operation, display the detailed information about the application data that is recommended to be buffered. For example, the electronic device 100 displays a user interface 540 shown in FIG. 5D.

As shown in FIG. 5D, a signal identifier 541 on the user interface 540 indicates that the electronic device 100 currently accesses a 5G network with five signal bars. The user interface 540 includes a title 542 (including characters "Recommendation list"), recommendation information 543 of a video application, and recommendation information 544 of a short video application.

The recommendation information 543 of the video application may include an intelligent buffer control 543A, a recently-watched-video buffer control 543B, and a current-event-hotspot buffer control 543C. The control 543A may trigger buffering of application data of the video application. The application data may be determined by the electronic device 100 according to a preset rule, for example, the application data includes data of a video recently watched and video data of news and hotspot. The buffer control 543B may trigger buffering of data of a video recently watched by the user in the video application, for example, the seventh episode of the "Video a". The buffer control 543C may trigger buffering of video data of news and hotspot in the video application. The recommendation information 543 of the video application may further include a download control 543D. The download control 543D may trigger display of a user interface (for example, a home page) of the video application, for the user to select video data to be buffered.

The recommendation information 544 of the short video application may include an intelligent buffer control 544A, a recommended-video buffer control 544B, a followed-video buffer control 544C, and a download control 544D. The control 544A and the download control 544D are similar to the control 543A and the download control 543D. The buffer control 544B may trigger buffering of data of a recommended video in the short video application, and the buffer control 544C may trigger buffering of video data of another user followed by the user in the short video application.

It may be understood that the user may trigger, based on the recommendation list shown in FIG. 5D, the electronic device 100 to buffer the application data, for example, trigger buffering of data by using at least one control of the control 543A, the buffer control 543B, the buffer control 543C, the control 544A, the buffer control 544B, or the buffer control 544C. For example, after the display of the user interface of the video application is triggered by using the download control 543D, buffering of data is triggered based on the user interface. For example, after the display of the user interface of the short video application is triggered by using the download control 544D, buffering of data is triggered based on the user interface. In some embodiments, the leftmost screen application obtains the indication that the user is going to travel, and then may display trigger of the buffering of the application data based on the recommendation list shown in FIG. 5D. A specific example is similar to the user interface 530 shown in FIG. 5C.

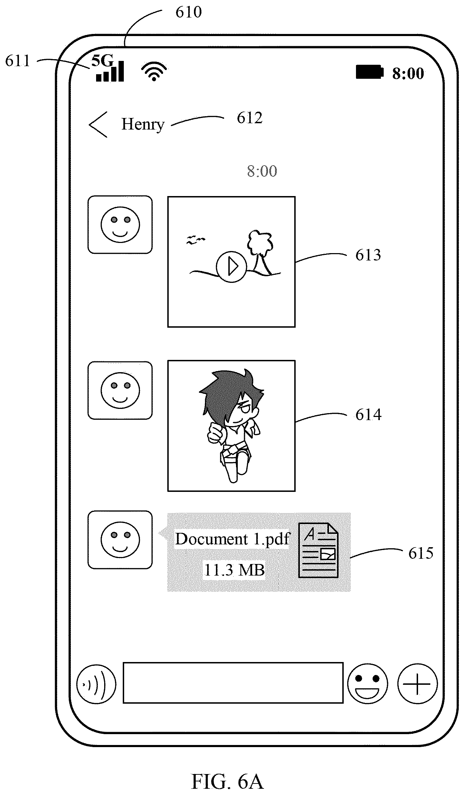

FIG. 6A to FIG. 6D show examples of diagrams of user interfaces of an instant messaging application.

As shown in FIG. 6A, the electronic device 100 may display a user interface 610 of the instant messaging application. The user interface 610 may include a signal identifier 611 and chat information 612. The signal identifier 611 indicates that the electronic device 100 currently accesses a 5G network with five signal bars (namely, full signal bars) and accesses to a Wi-Fi network. The chat information 612 indicates a chat object "Henry" of a current chat. The user interface 610 further includes a plurality of chat messages of the current chat, for example, a message 613 in a video form, a message 614 in a picture form, and a message 615 in a document form (specifically, a PDF format) in ascending order of receiving moments.

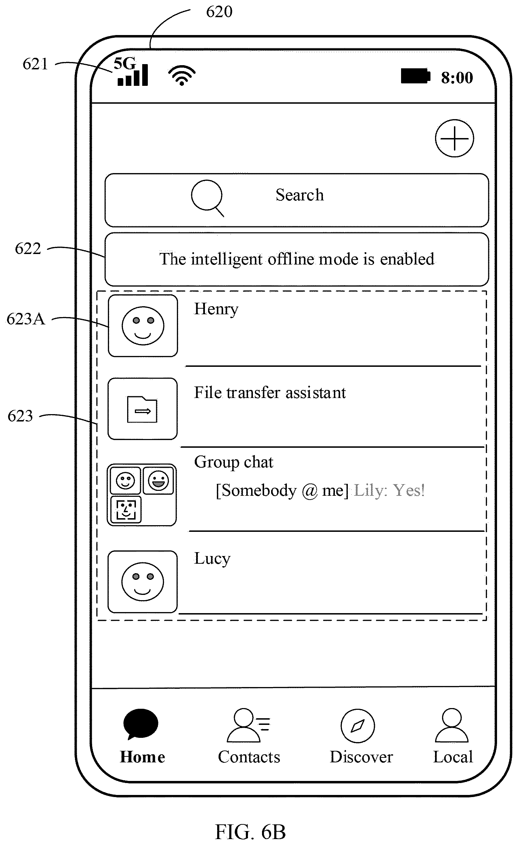

In some embodiments, it is assumed that a user has enabled an intelligent offline mode of the instant messaging application in advance. For a specific example, refer to FIG. 4A. If the instant messaging application obtains an indication that the user is going to travel, the instant messaging application may automatically buffer a chat message (which may also be referred to as an instant message) in the instant messaging application, and inform the user that the intelligent offline mode is currently enabled. For example, the electronic device 100 may display a user interface 620 shown in FIG. 6B.

As shown in FIG. 6B, the user interface 620 may include a signal identifier 621, prompt information 622, and a chat list 623. The signal identifier 621 indicates that the electronic device 100 currently accesses a 5G network with five signal bars (namely, full signal bars) and accesses a Wi-Fi network. The prompt information 622 includes characters "The intelligent offline mode is enabled", and is used to prompt the user that the intelligent offline mode is currently enabled. The chat list 623 includes a plurality of pieces of identification information of chats. The plurality of pieces of identification information may be arranged from top to bottom in descending order of chat times. For any chat, if a latest instant message is sent by another user to a current user (namely, a user using the electronic device 100), a chat time is a receiving moment of the message; or if a latest instant message is sent by a current user to another user, a chat time is a sending moment of the message. For example, identification information 623A in the chat list 623 indicates a chat with a latest chat time (which may also be referred to as a latest chat), and a chat object of the chat is "Henry". For specific content of the chat, refer to the user interface 610 shown in FIG. 6A.

In some embodiments, after obtaining the indication that the user is going to travel, the instant messaging application may buffer the instant message according to a preset rule. Optionally, the instant messaging application may buffer instant messages of latest N chats. For one of the chats, the first X instant messages with smaller sizes in latest M instant messages are buffered, where N, M, and X are all positive integers. For example, it is assumed that N is 1, that is, the instant messaging application buffers an instant message in one latest chat. The chat is the chat whose chat object is "Henry" shown in FIG. 6A, and is also the chat indicated by the identification information 623A shown in FIG. 6B. The user interface 610 shown in FIG. 6A shows the chat messages of the chat, which are the message 613 in a video form, the message 614 in a picture form, and the message 615 in a document form in ascending order of receiving moments, and the three chat messages are arranged in ascending order of sizes as follows: the message 614, the message 613, and the message 615. It is assumed that X is 2, that is, the instant messaging application buffers the message 613 and the message 614 with relatively late receiving moments and relatively small sizes in the chat, and does not buffer the message 615 with a relatively large size.

It is not limited to the foregoing example in which the buffered message is determined based on a size order of instant messages. In some other examples, the buffered message may alternatively be determined based on an order of receiving moments of instant messages. For example, the instant messaging application may alternatively buffer the message 614 and the message 615 with relatively late receiving moments in the chat, and does not buffer the message 613 with a relatively early receiving moment.

In some embodiments, after the instant messaging application buffers the message 613 and the message 614 (for example, after the embodiment shown in FIG. 6B), when the electronic device 100 is in a scenario without network coverage or a scenario with weak network coverage, original content of the message 613 or the message 614 may be displayed in response to a user operation used to view the original content of the message 613 or the message 614.

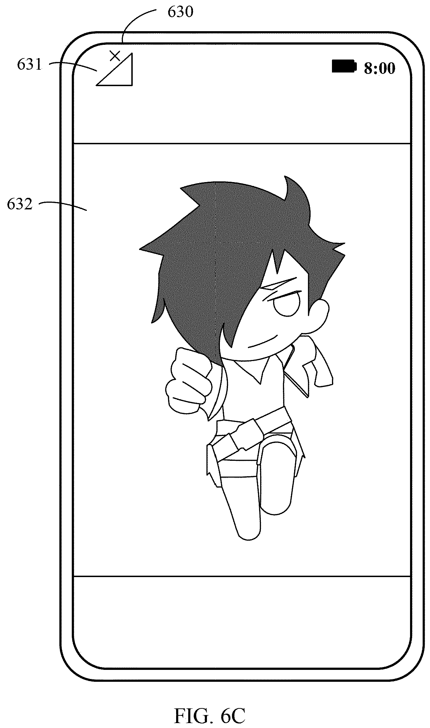

For example, the electronic device 100 may receive a user operation (for example, a tap operation) performed on the message 614 on the user interface 610 shown in FIG. 6A, and in response to the user operation, display a user interface 630 shown in FIG. 6C. As shown in FIG. 6C, the user interface 630 may include a signal identifier 631 and a picture 632. The signal identifier 631 indicates that the electronic device 100 currently cannot access a network, that is, the electronic device 100 is in the scenario without network coverage. The picture 632 is the original content of the message 614 on the user interface 610 shown in FIG. 6A, for example, an original picture of the message 614 in a picture form.

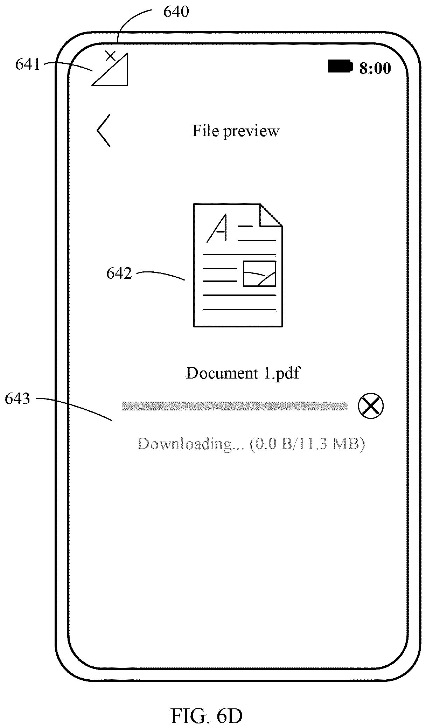

It may be understood that, because the instant messaging application does not buffer the message 615, when the electronic device receives a user operation (for example, a tap operation) performed on the message 615 on the user interface 610 shown in FIG. 6A, the electronic device 100 does not display original content of the message 615, for example, in response to the user operation, displays a user interface 640 shown in FIG. 6D. As shown in FIG. 6D, the user interface 640 includes a signal identifier 641, a file indication 642, and download information 643, where the signal identifier 641 indicates that the electronic device 100 currently cannot access a network, that is, the electronic device 100 is in the scenario without network coverage. The file indication 642 includes a document icon, which is consistent with a document icon included in the message 615 on the user interface 610 shown in FIG. 6A. The download information 643 includes a download progress bar and description information ("Downloading... (0.0 B/11.3 MB)"), which may indicate that the message 615 fails to be downloaded currently. Therefore, in this case, the user cannot view the original content of the message 615. The message 615 can be successfully downloaded only when the network of the electronic device 100 is recovered (for example, the user arrives at a travel destination), so that the user can view the original content of the message 615.

Based on the foregoing embodiments, the following describes an example of the application optimization method provided in embodiments of this application. The method may be applied to the electronic device 100 shown in FIG. 1. The method may be applied to the electronic device 100 shown in FIG. 2.

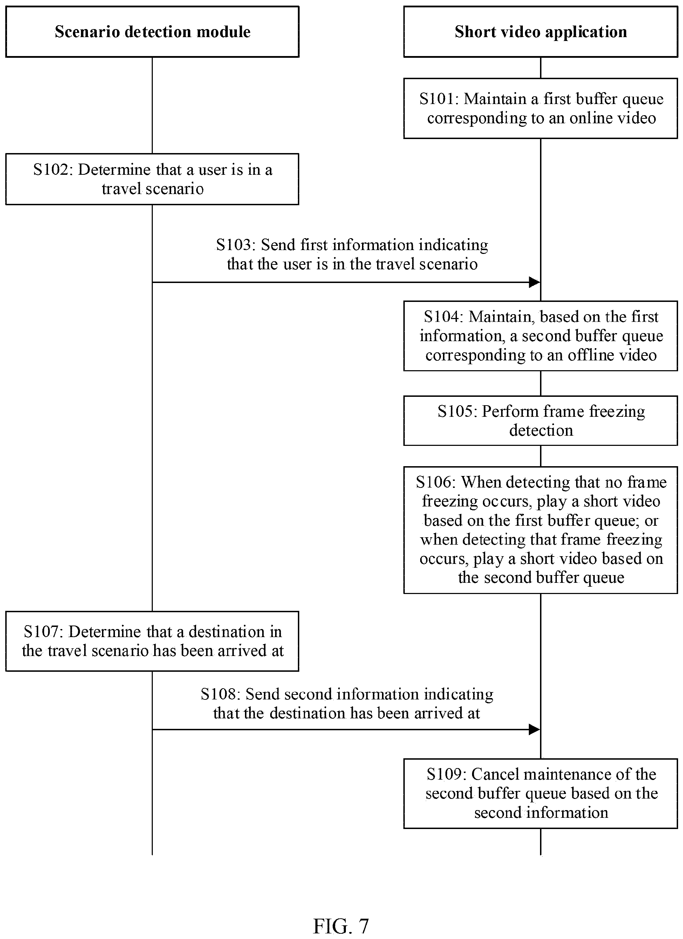

FIG. 7 is a schematic flowchart of an application optimization method according to an embodiment of this application. In FIG. 7, an example in which the electronic device 100 includes a scenario detection module and a short video application is used for description. For descriptions of the scenario detection module and the short video application, refer to descriptions of the scenario detection module and the short video application in FIG. 2. The method may include, but is not limited to, the following steps.

S101: The short video application maintains a first buffer queue corresponding to an online video.

In this application, the short video application may buffer (or download) video data in a queue structure. The buffered video data is stored in a buffer queue (which may also be referred to as a queue for short). For example, an electronic device downloads video data from a network device (for example, an application server that provides a service for the short video application), and stores the downloaded video data in the buffer queue. It may also be understood as the short video application maintaining the buffer queue, and the video data stored in the buffer queue is used by the short video application to play a short video. In some embodiments, any buffer queue maintained by the short video application is used to store video data of a short video. The short video in this application may be a video whose playback duration is less than or equal to preset duration (for example, 30 seconds).

In some embodiments, the first buffer queue includes N buffer queues, where N is an integer greater than 1. In some embodiments, for any one of the N buffer queues, when the short video application downloads video data to the buffer queue, the short video application may play existing video data in the buffer queue, which may be understood as "playing while downloading". A short video that is being played currently can be understood as an online video.

In some embodiments, for any one of the N buffer queues, it is assumed that the short video application has downloaded all video data of a short video to the buffer queue, and after the short video application completes playing the video data in the buffer queue (that is, completes playing the short video), the video data in the buffer queue may be stored in a memory of the electronic device, and the buffer queue is cleared, so that the short video application continues to download video data of another short video to the buffer queue. For example, the buffer queue may be understood as a temporary buffer (buffer). After the buffer queue stores all video data of a short video, the video data in the buffer queue is transferred to a local memory, and the buffer queue may continue to store video data of another short video.

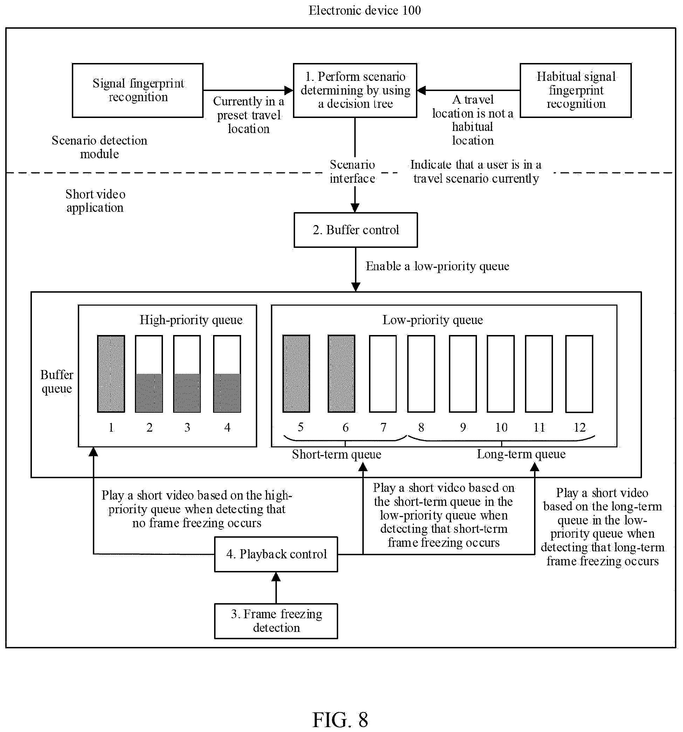

For example, as shown in FIG. 8, a high-priority queue in buffer queues on a short video application side is the first buffer queue. The first buffer queue includes a buffer queue 1 to a buffer queue 4. When maintaining the first buffer queue, the short video application may separately download video data of a short video 4 to a short video 7 to the buffer queue 1 to the buffer queue 4. The short video 4 is a video being played by the short video application, that is, the short video application currently plays video data in the buffer queue 1. When the short video application plays the video data in the buffer queue 1, the video data of the short video 4 may be continuously downloaded to the buffer queue 1 until the short video 4 is completely downloaded. The short video application may download a short video 5 to a short video 7 until a beginning part of each short video in the short video 5 to the short video 7 is completely downloaded. When the short video application receives an instruction for playing a next short video, the short video application may play video data in the buffer queue 2, and at the same time continuously download video data of the short video 5 to the buffer queue 2 until the short video 5 is completely downloaded. In addition, the short video application clears the video data in the buffer queue 1 (for example, the video data of the short video 1 is stored locally), and downloads video data of a short video 8 to the buffer queue 1 until a beginning part of the short video 8 is completely downloaded. The beginning part of the short video is, for example, but is not limited to, the first 5 seconds of the short video, or may be the first 1/3 of the short video. This is not limited in this application.

It may be understood that when the electronic device is in a scenario in which network performance is relatively good, a speed at which the short video application buffers the video data is greater than a speed at which the video data is played. Therefore, frame freezing does not occur when the short video is played based on the first buffer queue. However, when the electronic device is in a scenario without network coverage or a scenario with weak network coverage, a speed at which the short video application buffers the video data may not keep up with a speed at which the video data is played. Therefore, frame freezing occurs when the short video is played based on the first buffer queue.

S102: The scenario detection module determines that the user is in a travel scenario.

In some embodiments, the scenario detection module may recognize, by using but not limited to a signal fingerprint, a fence, a cell (cell) identity, a GPS, or the like, whether the user is in a preset travel location, to determine whether the user is in the travel scenario. The preset travel location includes, for example, but is not limited to, an airport, a railway station/high-speed railway station, a bus station, a subway station, a bus stop, a highway entrance/exit, a dock, or a city-town/city-country junction. Optionally, the scenario detection module may recognize, based on a signal fingerprint, a location at which the signal fingerprint is collected, for example, an indoor location. The signal fingerprint includes, for example, a signal identifier (for example, identification information SSID of a Wi-Fi signal) and signal strength (for example, signal strength RSSI of the Wi-Fi signal). Optionally, the scenario detection module may recognize, based on a fence, a location of the fence. For example, the fence is a gate of an airport or a railway station/high-speed railway station. Optionally, the scenario detection module may recognize a current location of the electronic device based on identification information of a cell in which the electronic device is located. Optionally, the scenario detection module may recognize, based on GPS coordinates of the electronic device, a location corresponding to the coordinates.

In some embodiments, when determining that the user is in the preset travel location, the scenario detection module may determine whether the travel location is a habitual activity location of the user, and when the travel location is not the habitual activity location of the user (for example, the user is not a staff member in the travel location), it may be determined that the user is currently in the travel scenario/the user is going to travel. For example, the scenario detection module compares a signal fingerprint of the travel location with a signal fingerprint of the preset habitual activity location, and when the two are different, the scenario detection module determines that the travel location is not the habitual activity location.

In some embodiments, when the scenario detection module detects that the user is currently in the travel scenario/the user is going to travel, S103 may be performed.

S103: The scenario detection module sends, to the short video application, first information indicating that the user is in the travel scenario/the user is going to travel.

In some embodiments, the first information further includes the travel location that is of the user and that is determined by the scenario detection module in S 102.

S104: The short video application maintains, based on the first information, a second buffer queue corresponding to an offline video.

In some embodiments, after receiving the first information, the short video application may add a to-be-maintained buffer queue, namely, the second buffer queue, which may also be referred to as a to-be-enabled second buffer queue. In addition, the short video application still maintains the first buffer queue.

In some embodiments, after receiving the first information, the short video application may enable the second buffer queue and display prompt information. For example, the electronic device may display the user interface 420 shown in FIG. 4B. The signal identifier 421 on the user interface 420 indicates that the electronic device currently accesses a 5G network with five signal bars (namely, full signal bars), that is, the electronic device is in the scenario in which network performance is relatively good. The user interface 420 includes the prompt information 423 ("The intelligent offline mode is enabled. Some mobile data will be used due to no Wi-Fi connection"), indicating that the intelligent offline mode is enabled and a short video is being buffered currently by using a cellular network of the electronic device. The short video application performs S104 only when the intelligent offline mode is enabled. In some embodiments, before the short video application receives the first information, the electronic device may receive a user operation, and enable the intelligent offline mode based on the user operation. For example, the electronic device may display the user interface 410 shown in FIG. 4A. The setting switch 412 on the user interface 410 is in an enabled state, which represents that the function "intelligent offline mode" is enabled.

In some other embodiments, after receiving the first information, the short video application may display prompt information. The short video application may receive a user operation entered by the user based on the prompt information, enable the intelligent offline mode based on the user operation, and perform S104. The short video application performs S104 only when the intelligent offline mode is enabled. For example, after the short video application receives the first information, the electronic device may display the prompt information 315 (including the characters "Are you sure you want to enable the intelligent offline mode? After the intelligent offline mode is enabled, the current video is automatically buffered for watching during the travel") that is on the user interface 310 shown in FIG. 3A. The prompt information 315 further includes the OK control 315A and the cancel control 315B. The OK control 315Ais configured to enable the intelligent offline mode, and the cancel control 315B is configured to cancel enabling of the intelligent offline mode. The electronic device may receive a user operation performed on the OK control 315A, and in response to the user operation, enable the intelligent offline mode and perform S104.

In some embodiments, the second buffer queue includes M buffer queues, where M is an integer greater than 1. In some embodiments, for any one of the M buffer queues, the short video application may download video data of a short video to the buffer queue until the short video is completely downloaded. Based on a buffer queue that stores video data of a complete short video, the short video application may play the short video, which may be understood as "playing after downloading is completed", and the short video may be understood as an offline video.

In some embodiments, for any one of the M buffer queues, after the short video application downloads all video data of a short video to the buffer queue, the short video application may clear the buffer queue after preset duration (for example, 24 hours), so that the short video application continues to download video data of another short video to the buffer queue.

In some embodiments, for any one of the M buffer queues, after the short video application downloads all video data of a short video to the buffer queue, if the short video application does not play the video data in the buffer queue, the short video application may clear the buffer queue after preset duration (for example, 24 hours); or if the short video application plays the video data in the buffer queue, the buffer queue may be cleared after the playback is completed, and the video data in the buffer queue is stored in a memory of the electronic device.

For example, as shown in FIG. 8, a low-priority queue in the buffer queues on the short video application side is the second buffer queue. The second buffer queue includes a buffer queue 5 to a buffer queue 12. When maintaining the second buffer queue, the short video application may first download a short video 6 to the buffer queue 5; when the short video 6 is completely downloaded, the short video application downloads a short video 7 to a buffer queue 6; and subsequent steps are performed similarly in this way. In other words, video data is sequentially downloaded to the buffer queue 5 to the buffer queue 12.

In some embodiments, a priority of the second buffer queue is lower than a priority of the first buffer queue. Optionally, the short video application first buffers video data in the first buffer queue, and then buffers video data in the second buffer queue. For example, as shown in FIG. 8, in the buffer queues on the short video application side, the high-priority queue is the first buffer queue, and the low-priority queue is the second buffer queue. The short video application first downloads video data to the first buffer queue. The buffer queue 1 in the first buffer queue stores video data of a complete short video, and the buffer queue 2 to the buffer queue 4 each store a beginning part of a short video (short videos stored in different buffer queues are different). It may be understood that after the video data in the first buffer queue is completely downloaded, the short video application may download the video data to the second buffer queue. In a process in which the short video application downloads the video data to the second buffer queue, if the video data needs to be downloaded to the first buffer queue (for example, when an instruction for playing a next short video is received, video data of the short video needs to be downloaded), the video data is preferentially downloaded to the first buffer queue.

In some embodiments, any short video buffered in the second buffer queue may be different from a short video buffered in the first buffer queue. In some embodiments, short videos buffered in the first buffer queue and the second buffer queue are short videos recommended by the short video application. For example, the short video application may recommend a short video to the user based on user information such as a playback history and personal information, news and hotspot, and the like.

S105: The short video application performs frame freezing detection.

In some embodiments, the short video application may detect whether frame freezing occurs during playback of a short video, and optionally, duration of frame freezing. Optionally, the short video application may detect, when a short video is played based on the first buffer queue, whether frame freezing occurs, and optionally, duration of frame freezing. For example, the short video application may detect whether duration in which a playback progress of a currently played short video remains unchanged exceeds preset duration. When the duration in which the playback progress remains unchanged exceeds the preset duration, it may be considered that frame freezing occurs, and the duration in which the playback progress remains unchanged may be recorded and is duration of frame freezing.

S106: When detecting that no frame freezing occurs, the short video application plays a short video based on the first buffer queue; or when detecting that frame freezing occurs, the short video application plays a short video based on the second buffer queue.

In some embodiments, when it is detected that no frame freezing occurs, that the short video application plays the video data in the first buffer queue may be understood as playing an online short video. For example, when the short video application plays the short video based on the first buffer queue, the electronic device may display the user interface 450 shown in FIG. 4E. The signal identifier 451 on the user interface 450 indicates that the electronic device currently accesses a 5G network with five signal bars (namely, full signal bars). That is, the electronic device is in a scenario in which network performance is relatively good. In this case, the short video application detects that no frame freezing occurs. The user interface 450 is configured to play the online short video 3.

In some other embodiments, when it is detected that frame freezing occurs, that the short video application plays the video data in the second buffer queue may be understood as playing an offline short video. In one case, a user interface used when the short video application plays an offline short video is the same as a user interface used when the short video application plays an online short video, and neither includes information indicating that a played short video is an offline video. For example, when the short video application plays the short video based on the second buffer queue, an interface displayed by the electronic device is similar to the user interface 450 shown in FIG. 4E. A difference lies in that a signal identifier on the interface displayed by the electronic device is the signal identifier 431 on the user interface 430 shown in FIG. 4C and indicates that the electronic device currently accesses a 2G network with two signal bars, that is, the electronic device is in a scenario with weak network coverage. In this case, the short video application detects that frame freezing occurs. In addition, the interface displayed by the electronic device is configured to play the offline short video 3. In another case, a user interface used when the short video application plays an offline short video is different from a user interface used when the short video application plays an online short video, and the user interface used when the short video application plays an offline short video includes information indicating that a short video is an offline video. For example, when the short video application plays the short video based on the second buffer queue, the electronic device may display the user interface 430 shown in FIG. 4C. The signal identifier 431 on the user interface 430 indicates that the electronic device currently accesses a 2G network with two signal bars, that is, the electronic device is in a scenario with weak network coverage. In this case, the short video application detects that frame freezing occurs. The user interface 430 further includes the identification information 432 used to indicate that the currently played short video 1 is an offline video.

In some embodiments, when the short video application plays the short video based on the first buffer queue, if it is detected that frame freezing occurs, the short video application may switch to playing the short video based on the second buffer queue. For example, when the short video application plays the short video based on the first buffer queue, the electronic device may display the user interface 420 shown in FIG. 4B. The user interface 420 is configured to play the short video 1. The signal identifier 421 on the user interface 420 indicates that the electronic device currently accesses a 5G network with five signal bars (namely, full signal bars), that is, the electronic device is in a scenario in which network performance is relatively good. When the scenario in which network performance is relatively good is switched to the scenario without network coverage or the scenario with weak network coverage, if the short video application detects that frame freezing occurs, the short video application may switch to playing the short video based on the second buffer queue. The electronic device may display the user interface 430 shown in FIG. 4C. The user interface 430 is also configured to play the short video 1. The signal identifier 431 on the user interface 430 indicates that the electronic device currently accesses a 2G network with two signal bars, that is, the electronic device is in the scenario with weak network coverage.

This is not limited to the foregoing examples. In some other examples, when the short video application plays the short video based on the first buffer queue, if it is detected that frame freezing occurs, prompt information may be displayed. The prompt information is used to prompt the user to watch a next short video. Optionally, the short video application may play the short video based on the second buffer queue when receiving a user operation used to watch a next short video.

In some embodiments, when the short video application plays the short video based on the second buffer queue, if it is detected that no frame freezing occurs, the short video application may switch to playing the short video based on the first buffer queue. For example, when the short video application plays the short video based on the second buffer queue, the electronic device may display the user interface 430 shown in FIG. 4C. The user interface 430 is configured to play the short video 1. The signal identifier 431 on the user interface 430 indicates that the electronic device currently accesses a 2G network with two signal bars, that is, the electronic device is in the scenario with weak network coverage. When the network is recovered, if the short video application detects that no frame freezing occurs, the short video application may switch to playing the short video based on the first buffer queue. The electronic device may display the user interface 450 shown in FIG. 4E, and the user interface 450 is configured to play the short video 3. The signal identifier 451 on the user interface 450 indicates that the electronic device 100 currently accesses a 5G network with five signal bars (namely, full signal bars), that is, the electronic device 100 is in the scenario in which network performance is relatively good.

In some embodiments, when the short video application plays the short video based on the second buffer queue, if all short videos in the second buffer queue have been finished, and the short video application detects that frame freezing still occurs, the short video application may display prompt information to prompt the user that all offline short videos have been finished. For example, the electronic device may display the user interface 440 shown in FIG. 4D. The signal identifier 441 on the user interface 440 indicates that the electronic device currently accesses a 2G network with two signal bars, that is, the electronic device is in the scenario with weak network coverage. In this case, the short video application detects that frame freezing occurs. The user interface 440 further includes the prompt information 443 ("No more offline short videos") used to prompt the user that there is no other offline short video that can be played currently.

In some embodiments, the second buffer queue may include a short-term queue and a long-term queue. Both the short-term queue and the long-term queue include at least one buffer queue. Optionally, a quantity of buffer queues included in the short-term queue is less than a quantity of buffer queues included in the long-term queue. When it is detected that short-term frame freezing occurs, the short video application plays a short video based on the short-term queue. When it is detected that long-term frame freezing occurs, the short video application plays a short video based on the long-term queue. The short-term frame freezing is a frame freezing case in which duration of frame freezing is less than or equal to first duration (for example, 30 seconds). The long-term frame freezing is a frame freezing case in which duration of frame freezing is greater than or equal to second duration (for example, 30 seconds). The first duration is less than or equal to the second duration. For example, as shown in FIG. 8, in the buffer queues on the short video application side, the low-priority queue is the second buffer queue, the short-term queue includes the buffer queue 5 to a buffer queue 7, and the long-term queue includes a buffer queue 8 to the buffer queue 12.

In some embodiments, a priority of the short-term queue is higher than a priority of the long-term queue. Optionally, the short video application first buffers video data in the short-term queue, and then buffers video data in the long-term queue. For example, as shown in FIG. 8, in the buffer queues on the short video application side, the short-term queue includes the buffer queue 5 to the buffer queue 7, the long-term queue includes the buffer queue 8 to the buffer queue 12, and the short video application sequentially downloads video data to the buffer queue 5 to the buffer queue 12. After data of a short video is downloaded to the buffer queue 5, data of another short video is downloaded to the buffer queue 6, and so on.

In some embodiments, a user interface displayed when the short video application plays a short video based on the short-term queue is the same as a user interface displayed when the short video application plays an online short video, and neither includes information indicating that a played short video is an offline video. For example, the electronic device displays the user interface 450 shown in FIG. 4E. A user interface displayed when the short video application plays a short video based on the long-term queue includes the information indicating that a played short video is an offline video. For example, the electronic device displays the user interface 430 shown in FIG. 4C. The user interface 430 includes the identification information 432 used to indicate that the currently played short video 1 is an offline video. In this way, the user can be unaware of short-term frame freezing, and the user can be aware of long-term frame freezing, which improves user experience.

In some embodiments, after receiving the first information including the travel location that is of the user and that is determined by the scenario detection module in S102, the short video application may determine, based on the travel location, whether to classify the added second buffer queue into a short-term queue and a long-term queue. Optionally, when the travel location is a first preset location, the added second buffer queue is classified into the short-term queue and the long-term queue. When the travel location is a second preset location, the added second buffer queue is not classified into the short-term queue and the long-term queue. For example, when the travel location is a location in which short-term frame freezing may subsequently occur, such as a railway station/high-speed railway station, a bus station, a subway station, a bus stop, a highway entrance/exit, a dock, or a city-town/city-country junction, the short video application may maintain the short-term queue and the long-term queue as shown in FIG. 8. When it is detected that short-term frame freezing occurs subsequently, the short video application may switch to playing a short video based on the short-term queue. Alternatively, when it is detected that long-term frame freezing occurs subsequently, the short video application may switch to playing a short video based on the long-term queue. When the travel location is a location such as an airport in which only long-term frame freezing may occur subsequently, the low-priority queue (namely, the second buffer queue) shown in FIG. 8 may be maintained, and the short-term queue and the long-term queue are not distinguished. When it is detected that frame freezing occurs subsequently, the short video application may switch to playing a short video by using the low-priority queue.

This is not limited thereto. In some other embodiments, after the electronic device receives a user operation used to enable an airplane mode, the short video application may directly play the short video based on the second buffer queue without distinguishing between the short-term queue and the long-term queue. A manner of determining whether to distinguish between the short-term queue and the long-term queue is not limited in this application.

In a possible implementation, the method further includes the following steps.

S 107: The scenario detection module determines that a destination in the travel scenario has been arrived at.

In some embodiments, the scenario detection module may detect, based on a transportation number, whether the user arrives at a travel destination. The transportation number may indicate a travel line and corresponding number of a transport means taken by the user. The transportation number may indicate a travel route that starts from a start location, passes through a plurality of locations, and ends at a destination location.

In some embodiments, the transportation number used to detect whether the user arrives at the travel destination may be determined based on the travel location that is of the user and that is determined in S102. One of the start location, the plurality of locations passed through on the way, and the destination location that are indicated by the transportation number may correspond to the travel location that is of the user and that is determined in S102. This is not limited thereto. The transportation number may be further determined with reference to other information (for example, travel information, a time at which the electronic device enables an airplane mode, and a time at which the user arrives at the travel location). For example, the travel location that is of the user and that is determined in S102 is Tianhe Airport in Wuhan, and the time at which the electronic device enables an airplane mode is 6:00 a.m. on March 29. The transportation number used to detect whether the user arrives at the travel destination may be an airplane travel line whose start location is Tianhe Airport in Wuhan and whose departure time is a latest time after 6:00 a.m.

In some embodiments, when the scenario detection module detects that the user arrives at the travel destination, S108 may be performed.

S108: The scenario detection module sends, to the short video application, second information indicating that the destination has been arrived at.

S109: The short video application cancels maintenance of the second buffer queue based on the second information.

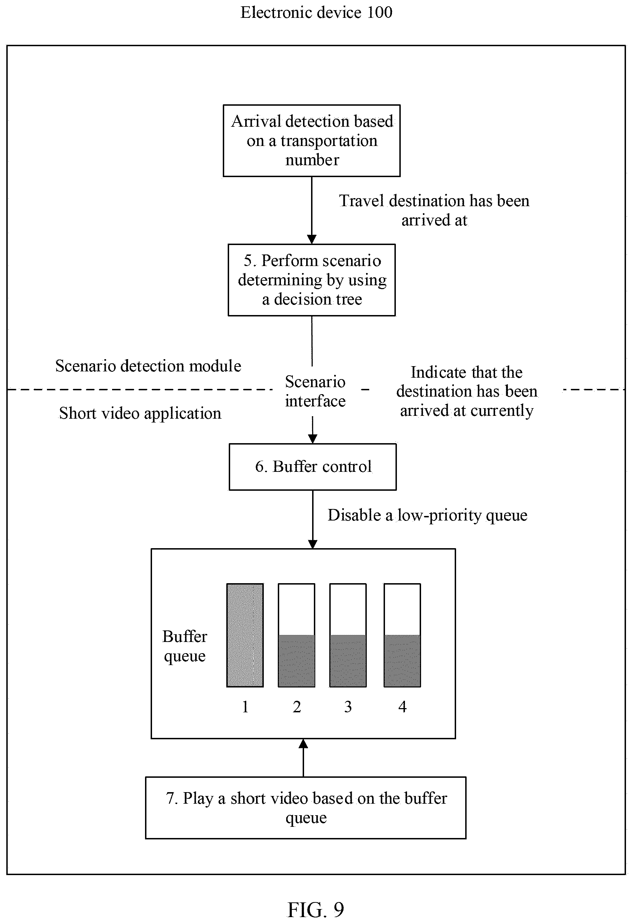

In some embodiments, after receiving the second information, the short video application may cancel maintenance of the second buffer queue, which may also be referred to as disabling the second buffer queue, or may be referred to as releasing the second buffer queue. For example, after receiving the first information, the short video application may maintain a buffer queue shown in FIG. 8. The buffer queue shown in FIG. 8 includes a high-priority queue (namely, the first buffer queue, including the buffer queue 1 to the buffer queue 4) and a low-priority queue (namely, the second buffer queue, including the buffer queue 5 to the buffer queue 12). After receiving the second information, the short video application may maintain a buffer queue shown in FIG. 9. The buffer queue shown in FIG. 9 includes the buffer queue 1 to the buffer queue 4 (namely, the high-priority queue shown in FIG. 8).

In some embodiments, after canceling maintenance of the second buffer queue, the short video application may play the short video based on the first buffer queue.

In some embodiments, for an implementation example of S102 to S106, refer to FIG. 8. As shown in FIG. 8, the scenario detection module may perform signal fingerprint recognition, and recognize that the user is currently in the preset travel location. The scenario detection module may further perform habitual signal fingerprint recognition, and recognize that the travel location is not a habitual location. (1) The scenario detection module may perform scenario determining by using a decision tree based on the foregoing recognition that the user is currently located in the preset travel location and the travel location is not the habitual location. The scenario detection module may determine that the user is currently in the travel scenario, and indicate, to the short video application through a scenario interface, that the user is currently in the travel scenario. (2) The short video application may perform buffer control based on the indication of the scenario detection module, that is, enable the low-priority queue. In this case, the buffer queue maintained by the short video application may include the high-priority queue (the buffer queue 1 to the buffer queue 4) and the low-priority queue. For a manner of maintaining the high-priority queue by the short video application, refer to the description of S101. For a manner of maintaining the low-priority queue by the short video application, refer to the description of S104. The low-priority queue includes the short-term queue (the buffer queue 5 to the buffer queue 7) and the long-term queue (the buffer queue 8 to the buffer queue 12). (3) The short video application may perform frame freezing detection. (4) The short video application may perform playback control based on a frame freezing detection result. When it is detected that no frame freezing occurs, a short video is played based on the high-priority queue. When it is detected that short-term frame freezing occurs, a short video is played based on the short-term queue in the low-priority queue. When it is detected that long-term frame freezing occurs, a short video is played based on the long-term queue in the low-priority queue.

In some embodiments, for an implementation example of S107 to S109, refer to FIG. 9. As shown in FIG. 9, the scenario detection module may perform arrival detection based on the transportation number, and recognize that the user arrives at the travel destination. (5) The scenario detection module may perform scenario determining by using the decision tree based on the foregoing recognition that the user arrives at the travel destination. The scenario detection module may determine that the user arrives at the travel destination currently, and indicate, to the short video application through the scenario interface, that the user arrives at the destination currently. (6) The short video application may perform buffer control based on the indication of the scenario detection module, that is, disable the low-priority queue. In this case, the short video application maintains the buffer queue 1 to the buffer queue 4, namely, the high-priority queue shown in FIG. 8. For a manner in which the short video application maintains the buffer queue 1 to the buffer queue 4, refer to the description of S101. (7) The short video application may play a short video based on the buffer queue 1 to the buffer queue 4.

FIG. 8 and FIG. 9 are merely used as an example of an optimization procedure for the short video application, and should not constitute a limitation. For example, a quantity of buffer queues included in the high-priority queue, the low-priority queue, the short-term queue, or the long-term queue may be more or less.

In the embodiments shown in FIG. 7 to FIG. 9, after receiving the indication that the user is going to travel, the short video application may add the second buffer queue that is to be maintained and that corresponds to the offline video without affecting maintenance of the first buffer queue corresponding to the online video, which may be understood as that extra mobile data is used to download the offline video. This does not affect the playback and download of the online video. The short video application may play the short video based on the second buffer queue when it is detected that frame freezing occurs, and play the short video based on the first buffer queue when the travel destination has been arrived at or when a network is recovered. In this way, the user can normally use the short video application in the travel scenario (which may include the scenario with weak network coverage or the scenario without network coverage), which improves user experience.

In FIG. 7, the short video application is used as an example to describe a procedure of the application optimization method. A procedure of an application optimization method corresponding to a video application is similar to the procedure shown in FIG. 7. The following uses the video application as an example for description. The application optimization method may include but is not limited to the following steps.
1. The video application maintains a third buffer queue corresponding to an online video.

In this application, the video application may buffer (or download) video data in a queue structure. The buffered video data is stored in a buffer queue, which may also be referred to as the video application maintaining the buffer queue, and the video data stored in the buffer queue is used by the video application to play a video. In some embodiments, any buffer queue maintained by the video application is used to store video data of a video.

In some embodiments, the third buffer queue is a buffer queue. When the video application downloads video data to the third buffer queue, the video application may play existing video data in the third buffer queue, which may be understood as "playing while downloading". A video that is being played currently can be understood as an online video. In some embodiments, that the video application maintains a third buffer queue may include: when playback duration of downloaded video data in the third buffer queue is less than or equal to first preset duration (for example, 30 seconds), downloading video data whose playback duration is second preset duration (for example, 5 minutes) to the third buffer queue.

In some embodiments, when receiving an indication for playing a next video, the video application may clear video data in the third buffer queue, download video data of the next video to the third buffer queue, and play the video based on the third buffer queue.

2. A scenario detection module determines that a user is in a travel scenario.

Description of this step is similar to the description of S102 in FIG. 7. For details, refer to the description of S102 in FIG. 7.

3. The scenario detection module sends, to the video application, first information indicating that the user is in the travel scenario/the user is going to travel.

Description of this step is similar to the description of S103 in FIG. 7. For details, refer to the description of S103 in FIG. 7.

4. The video application maintains, based on the first information, a fourth buffer queue corresponding to an offline video.

Description of this step is similar to the description of S104 in FIG. 7. For details, refer to the description of S104 in FIG. 7. In the description, the first buffer queue is replaced with the third buffer queue, and the second buffer queue is replaced with the fourth buffer queue.

In some embodiments, any video buffered in the fourth buffer queue may be different from a video buffered in the third buffer queue. In some embodiments, a video buffered in the fourth buffer queue is a video recommended by the video application. For example, the video application may recommend a video to the user based on user information such as a playback history and personal information, news and hotspot, and the like. 5. The video application may perform frame freezing detection.

Description of this step is similar to the description of S105 in FIG. 7. For details, refer to the description of S105 in FIG. 7.

6. When detecting that no frame freezing occurs, the video application plays a video based on the third buffer queue; or when detecting that frame freezing occurs, the video application plays a video based on the fourth buffer queue.

In some embodiments, when it is detected that no frame freezing occurs, that the video application plays the video data in the third buffer queue may be understood as playing an online video. For example, when the video application plays the video based on the third buffer queue, the electronic device may display the user interface 340 shown in FIG. 3D. The signal identifier 341 on the user interface 340 indicates that the electronic device currently accesses a 5G network with five signal bars (namely, full signal bars). That is, the electronic device is in a scenario in which network performance is relatively good. In this case, the video application detects that no frame freezing occurs. The user interface 340 is configured to play the ninth episode of the online "Video a".

In some other embodiments, when it is detected that frame freezing occurs, that the video application plays the video data in the fourth buffer queue may be understood as playing an offline video. For example, when the video application plays the video based on the fourth buffer queue, the electronic device may display the user interface 320 shown in FIG. 3B. The signal identifier 321 on the user interface 320 indicates that the electronic device 100 currently cannot access a network. That is, the electronic device is in a scenario without network coverage. In this case, the video application detects that frame freezing occurs. The user interface 320 further includes the video identifier 323A used to indicate that a currently played video (the eighth episode of the "Video a") is an offline video. This is not limited to the foregoing examples. In some other examples, the video application may display prompt information when detecting that frame freezing occurs during playback of an online video. The prompt information is used to prompt the user to watch an offline video. Optionally, the video application may play the video data in the fourth buffer queue when receiving a user operation used to watch an offline video.

In some embodiments, when the video application plays the video based on the fourth buffer queue, if all videos in the fourth buffer queue have been finished, and the video application detects that frame freezing still occurs, the video application may display prompt information to prompt the user that all offline videos have been finished. For example, the electronic device may display the user interface 330 shown in FIG. 3C. The signal identifier on the user interface 330 is consistent with the signal identifier 321 on the user interface 320, and indicates that the electronic device 100 currently cannot access a network. That is, the electronic device is in a scenario without network coverage. In this case, the video application detects that frame freezing occurs. The user interface 330 further includes the prompt information 322 ("All offline videos have been finished. Waiting to get online ") used to prompt the user that there is no other offline video that can be played currently.

In a possible implementation, the method further includes the following steps.

7. The scenario detection module determines that a destination in the travel scenario has been arrived at.

Description of this step is similar to the description of S 107 in FIG. 7. For details, refer to the description of S 107 in FIG. 7.

8. The scenario detection module sends, to the video application, second information indicating that the destination has been arrived at.

Description of this step is similar to the description of S 108 in FIG. 7. For details, refer to the description of S 108 in FIG. 7.

9. The video application cancels maintenance of the fourth buffer queue based on the second information.

Description of this step is similar to the description of S 109 in FIG. 7. For details, refer to the description of S109 in FIG. 7. In the description, the first buffer queue is replaced with the third buffer queue, and the second buffer queue is replaced with the fourth buffer queue.

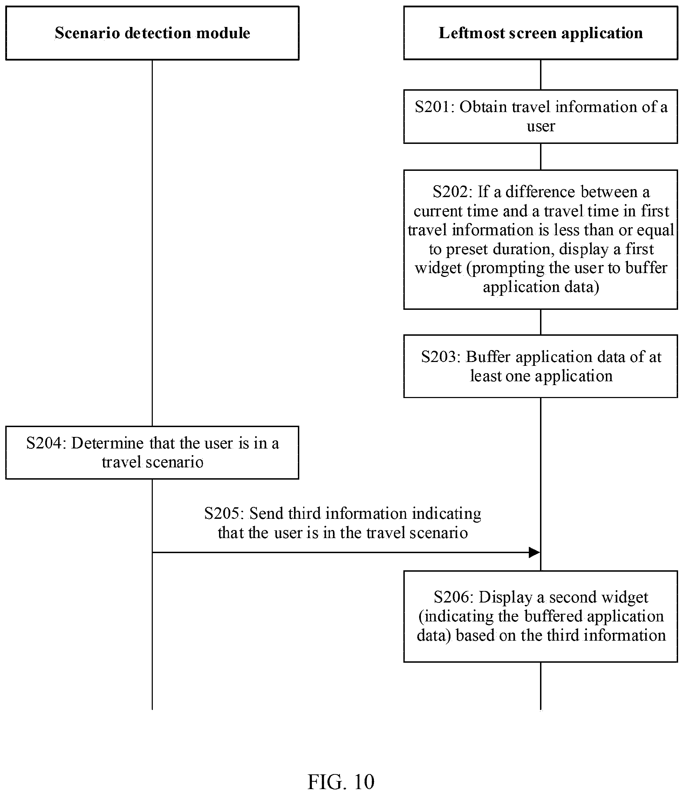

FIG. 10 is a schematic flowchart of another application optimization method according to an embodiment of this application. In FIG. 10, an example in which the electronic device 100 includes a scenario detection module and a leftmost screen application is used for description. For descriptions of the scenario detection module and the leftmost screen application, refer to descriptions of the scenario detection module and the leftmost screen application in FIG. 2. The method may include, but is not limited to, the following steps.

S201: The leftmost screen application obtains travel information of a user.

In some embodiments, the leftmost screen application may identify data in a first application, to obtain unmade-travel information of the user. For example, the leftmost screen application may identify an SMS message received in an SMS message application. For example, the leftmost screen application may identify information recorded in a calendar application, a schedule application, or a memo application. For example, the leftmost screen application may identify order information in a travel application or a ticket buying application.

In some embodiments, before identifying the data in the first application, the leftmost screen application may be granted permission for obtaining the data in the first application. For example, on an operating system start interface (out-of-box experience, OOBE) of the electronic device or a setting interface of the electronic device, the electronic device grants, based on a received user operation, the permission for obtaining the data in the first application to the leftmost screen application.

In some embodiments, the travel information of the user may indicate at least one of the following content: a transport means taken by the user in the travel, a start point (corresponding to a travel location), a destination, a time of departure from the start point (referred to as a departure time for short), a time of arrival at the destination (referred to as an arrival time for short), and the like. That the start point corresponds to the travel location includes: The start point is the travel location; or the travel location is within a range of the start point. For example, the travel location is Tianhe Airport in Wuhan, and the start point is Wuhan.

For example, the leftmost screen application may display a travel widget that indicates the travel information of the user, namely, the travel widget 512 on the user interface 510 shown in FIG. 5A. The travel information indicated by the travel widget 512 may include: a transport means (a D-train numbered D1111) taken by the user, a start point (Wuhan Station), a destination (Shenzhen Station), a departure time (6:44, March 16 (Wednesday)), and an arrival time (9:30, March 16 (Wednesday)).

S202: If a difference between a current time and a departure time in first travel information is less than or equal to preset duration, display a first widget (prompting the user to buffer application data).

In some embodiments, the first travel information is any piece of travel information in unmade-travel information that is obtained by the leftmost screen application. For example, the first travel information is a piece of travel information whose departure time is closest to a current time and that is in the unmade-travel information that is obtained by the leftmost screen application.

In some embodiments, the first widget is configured to prompt the user to buffer application data of at least one application.

For example, it is assumed that the preset duration is 24 hours, the first travel information is the travel information indicated by the travel widget 512 on the user interface 510 shown in FIG. 5A, and a departure time of the first travel information is 6:44 on March 16 (Wednesday). The travel widget 512 includes the indication information 512A. The indication information 512A indicates that duration between a current time and the departure time in the travel information indicated by the travel widget 512 is "24 hours". In this case, the leftmost screen application may display a first widget, namely, the offline recommendation widget 513 on the user interface 510 shown in FIG. 5A. The offline recommendation widget 513 includes the prompt information: "Offline service recommendation", "More recommended videos", and "One-tap buffer to watch videos during the travel", used to prompt the user to buffer the application data, for using buffered application data in the travel indicated by the travel widget 512.

S203: The leftmost screen application buffers the application data of the at least one application.

In some embodiments, when receiving a user operation used to buffer application data, the electronic device may send a first instruction to the leftmost screen application. Optionally, the user operation is a user operation for the first widget. After receiving the first instruction, the leftmost screen application may buffer the application data of the at least one application.

In some embodiments, the application data of the at least one application may be determined by the electronic device according to a preset rule. For example, the first widget is the offline recommendation widget 513 on the user interface 510 shown in FIG. 5A. The offline recommendation widget 513 includes the buffer control 513A. The electronic device may receive a user operation (for example, a tap operation) performed on the buffer control 513A, and in response to the user operation, determine the application data of the at least one application according to the preset rule, and buffer the application data of the at least one application. The at least one application is N applications recently used by the user, where N is a positive integer; and the application data of the at least one application is application data recently viewed by the user and/or application data such as news and hotspot recommended by the application to the user. When the leftmost screen application buffers the application data, the electronic device may display the user interface 520 shown in FIG. 5B. The offline recommendation widget 522 on the user interface 520 is configured to display the application data that is currently being buffered: the seventh episode of the "Video a" in a video application.

In some other embodiments, the application data of the at least one application may be determined by the electronic device based on the user operation. For example, the first widget is the offline recommendation widget 513 on the user interface 510 shown in FIG. 5A. The offline recommendation widget 513 includes the list control 513B. The electronic device may display, in response to the user operation (for example, the tap operation) performed on the list control 513B, the detailed information about the application data that is recommended to be buffered. In this case, the electronic device may display the user interface 540 shown in FIG. 5D. The user interface 540 includes a control (the control 543A, the control 543B, and the control 543C) configured to trigger downloading of a video of the video application and a control (the control 544A, the control 544B, and the control 544C) configured to trigger downloading of a short video of the short video application. The electronic device may receive a user operation performed on any one of the foregoing controls, and in response to the user operation, buffer video data corresponding to the control. For example, the video data corresponding to the control 543B is the seventh episode of the "Video a" in the video application. When the leftmost screen application buffers the video data corresponding to the control 543B, the electronic device may display the user interface 520 shown in FIG. 5B.

S204: The scenario detection module determines that the user is in a travel scenario.

The description of S204 is similar to the description of S102 in FIG. 7. For details, refer to the description of S102 in FIG. 7.

In some embodiments, when the scenario detection module detects that the user is currently in the travel scenario/the user is going to travel, S205 may be performed.

S205: The scenario detection module sends, to the leftmost screen application, third information indicating that the user is in the travel scenario/the user is going to travel.

In some embodiments, the third information further includes the travel location that is of the user and that is determined by the scenario detection module in S204.

S206: The leftmost screen application displays a second widget (indicating the buffered application data) based on the third information.

In some embodiments, after receiving the third information, the leftmost screen application may display the second widget. The second widget may indicate the buffered application data. Optionally, the second widget may indicate the application data of the at least one application that is buffered in S203.

In some embodiments, the leftmost screen application may determine, with reference to the unmade-travel information of the user and the third information, whether to display the second widget. For example, after the leftmost screen application receives the third information, the leftmost screen application may determine whether a difference between a departure time in the latest piece of travel information and the current time is less than or equal to a preset difference (for example, two hours), and display the second widget if a determining result is yes.

For example, the second widget is the offline recommendation widget 533 on the user interface 530 shown in FIG. 5C. The offline recommendation widget 533 is configured to display the buffered application data: the application data 533B (namely, the video data in the video application: the seventh episode and the eighth episode of the "Video a"), and the application data 533C (namely, the short video data in the short video application, where the total size of the short video data is 426 MB).

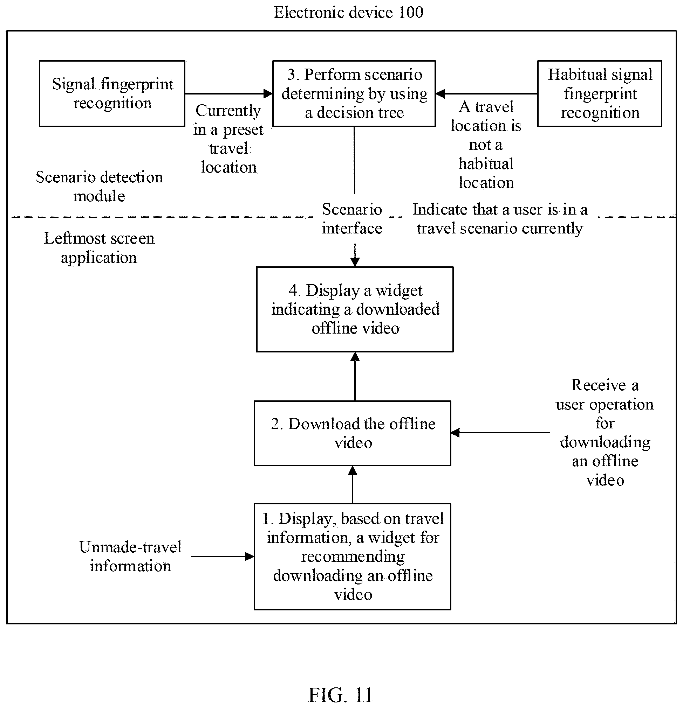

In some embodiments, for an implementation example of S201 to S206, refer to FIG. 11. As shown in FIG. 11, (1) after obtaining the unmade-travel information of the user, the leftmost screen application may display, based on the travel information, a widget (namely, the first widget) configured to recommend downloading an offline video, for example, after the user buys a D-train ticket (the travel widget 512 on the user interface 510 shown in FIG. 5A may be generated based on information about the D-train ticket), when a departure time in the D-train ticket arrives 24 hours later, the leftmost screen application may display the user interface 510 shown in FIG. 5A. The user interface 510 includes the offline recommendation widget 513 to prompt the user to download an offline video. (2) When receiving a user operation used to download an offline video, the leftmost screen application may download the offline video. For example, the leftmost screen application displays the user interface 520 shown in FIG. 5B. The scenario detection module may perform signal fingerprint recognition, and recognize that the user is currently in a preset travel location. The scenario detection module may further perform habitual signal fingerprint recognition, and recognize that the travel location is not a habitual location. (3) The scenario detection module may perform scenario determining by using a decision tree based on the foregoing recognition that the user is currently located in the preset travel location and the travel location is not the habitual location. The scenario detection module may determine that the user is currently in the travel scenario, and indicate, to the short video application through a scenario interface, that the user is currently in the travel scenario. (4) The leftmost screen application may display, based on the indication of the scenario detection module, a widget (namely, the second widget) indicating a downloaded offline video. For example, after the user arrives at Wuhan Station, the leftmost screen application displays the user interface 530 shown in FIG. 5C. The user interface 530 includes the offline recommendation widget 533 to display the downloaded offline video.

FIG. 11 is merely used as an example of an optimized procedure of the leftmost screen application, and should not constitute a limitation. For example, the offline video may not be displayed, but offline data of another application is displayed.

In the embodiments shown in FIG. 10 and FIG. 11, the leftmost screen application may prompt, by using the first widget at an earlier time before the user leaves, the user to download the application data. In addition, after the leftmost screen application receives the indication that the user is going to travel, the downloaded application data is displayed by using the second widget, to accurately prompt the user. This helps the user use the application data in the travel scenario, and increases a probability that the user uses the application data. A product function better meets a user requirement.

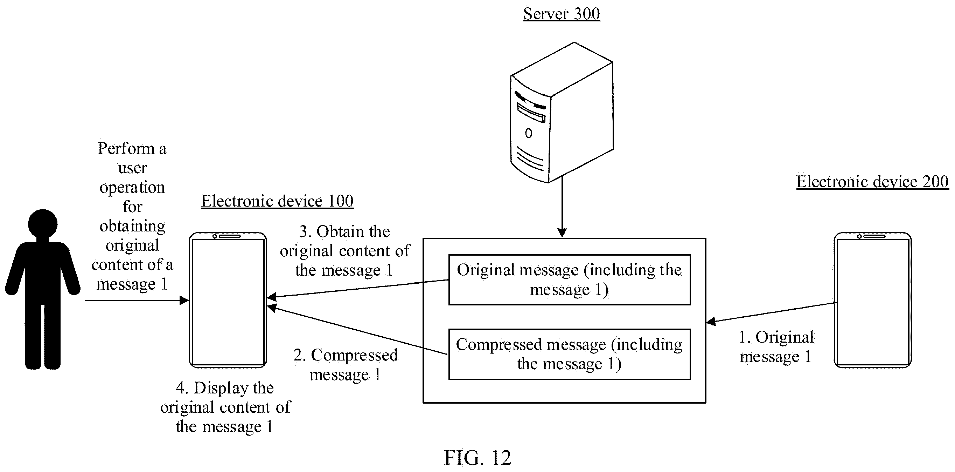

FIG. 12 shows an example of a diagram of an architecture of a communication system. The communication system may be configured to transmit a chat message (referred to as an instant message for short) in an instant messaging application.

As shown in FIG. 12, the communication system may include an electronic device 100, an electronic device 200, and a server 300. The electronic device 100 may be the electronic device 100 shown in FIG. 1, or may be the electronic device 100 shown in FIG. 2. For details, refer to the descriptions of FIG. 1 and FIG. 2. The electronic device 200 is similar to the electronic device 100. For details, refer to the description of the electronic device 100. In FIG. 12, an example in which both the electronic device 100 and the electronic device 200 are smartphones is used for description. The server 300 may include at least one server. For example, the server 300 is a server cluster including a plurality of servers, and any one server in the at least one server may be a hardware server or a cloud server. An instant messaging application is installed on the electronic device 100 and the electronic device 200, and the server 300 is, for example, an application server that provides a service for the instant messaging application.

The electronic device 100 may communicate with the server 300 over an internet, the electronic device 200 may communicate with the server 300 over the internet, and the electronic device 100 may communicate with the electronic device 200 through the server 300. The internet may include communication links such as a wired link and a wireless link, and network devices such as a base station, a router, and an access point (access point, AP). The wired link includes, for example, a high definition multimedia interface (high definition multimedia interface, HDMI), a universal serial bus (universal serial bus, USB), a coaxial cable, and an optical fiber. The wireless link includes, for example, Bluetooth, Wi-Fi, sidelink, NFC, UWB, and infrared.

In FIG. 12, a communication process is described by using an example in which a user 1 sends, through the electronic device 200, an instant message 1 to a user 2 using the electronic device 100. As shown in FIG. 12, (1) the electronic device 200 may first send an original message 1 to the server 300. After receiving the original message 1, the server 300 may store the original message 1 (for example, store the original message 1 in content management of the server 300), and may compress the original message 1 to obtain a compressed message 1. (2) When finding a target (namely, the electronic device 100) for receiving the message 1, the server 300 may send the compressed message 1 to the electronic device 100. In some embodiments, after sending the compressed message 1, the server 300 may delete the stored compressed message 1. In FIG. 12, compression is used as an example for description. During specific implementation, key information (for example, a title, a keyword, a type, a size, a thumbnail, or an icon) in a message may be identified, and the key information is used as a "compressed message". This is not limited in this application. The electronic device 100 may display the compressed message 1, for example, display key information in the message 1. For example, the electronic device 100 may display the user interface 610 shown in FIG. 6A. The user interface 610 includes a plurality of compressed chat messages. The message 613 on the user interface 610 is a thumbnail and indicates an original message in a video form. The message 614 on the user interface 610 is a thumbnail and indicates an original message in a picture form. The message 615 on the user interface 610 includes a document icon, a document name, and a document size, and indicates an original message in a document form. (3) Then, the electronic device 100 may receive a user operation used to obtain original content of the message 1, and obtain the original content of the message 1 from the server 300 in response to the user operation. (4) After obtaining the original content of the message 1, the electronic device 100 may display the original content of the message 1. For example, when receiving a user operation performed on the message 614 on the user interface 610 shown in FIG. 6A, the electronic device 100 may display original content of the message 614, that is, a picture 632 on the user interface 630 shown in FIG. 6C.

In some embodiments, after sending the compressed message 1, the server 300 may delete the stored compressed message 1. In some embodiments, the server 300 may have a timeout release mechanism. To be specific, after storing the original message 1, the server 300 may delete the original message 1 after preset duration (for example, 24 hours).

It may be understood that, when a user is in a scenario with weak network coverage or a scenario without network coverage, if the user wants to obtain original content of an instant message, the user needs to perform, in advance in a scenario in which network performance is relatively good, a user operation used to view the original content of the message, to download the original content of the message locally, or obtain the original content of the message from a server after the network is recovered, which may be understood as that the instant message is mainly for a non-real-time user requirement. In this case, user experience is poor.

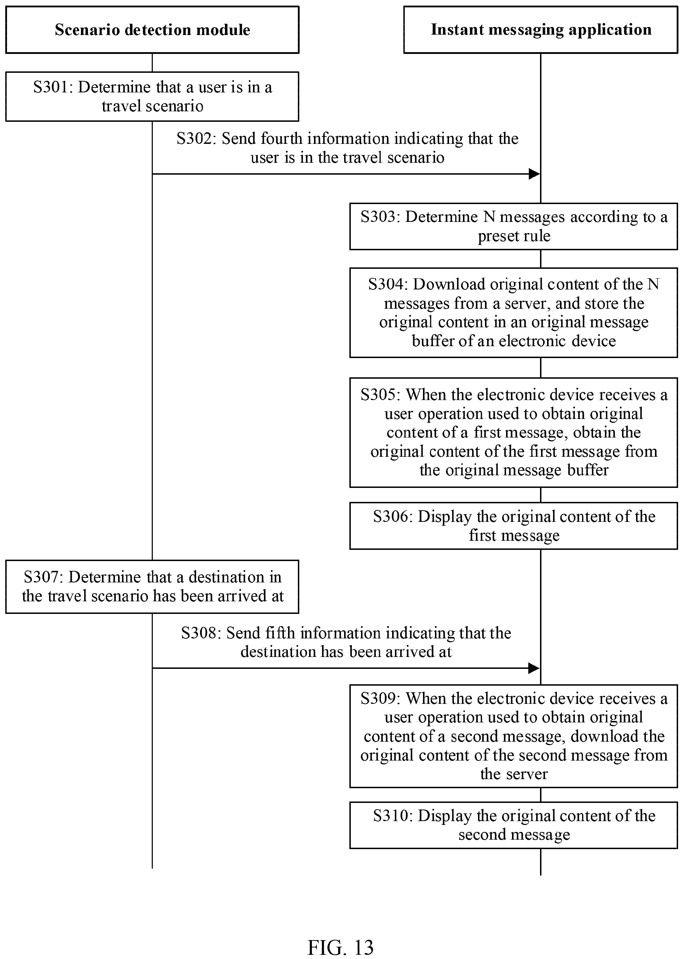

FIG. 13 is a schematic flowchart of another application optimization method according to an embodiment of this application. In FIG. 13, an example in which the electronic device 100 includes a scenario detection module and an instant messaging application is used for description. For descriptions of the scenario detection module and the instant messaging application, refer to the descriptions of the scenario detection module and the instant messaging application in FIG. 2. The method may include, but is not limited to, the following steps.

S301: The scenario detection module determines that a user is in a travel scenario.

The description of S301 is similar to the description of S102 in FIG. 7. For details, refer to the description of S102 in FIG. 7.

In some embodiments, when the scenario detection module detects that the user is currently in the travel scenario/the user is going to travel, S302 may be performed.

S302: The scenario detection module sends, to the instant messaging application, fourth information indicating that the user is in the travel scenario/the user is going to travel.

In some embodiments, the fourth information further includes a travel location that is of the user and that is determined by the scenario detection module in S301.

S303: The instant messaging application determines N messages (N is a positive integer) according to a preset rule.

In some embodiments, after receiving the fourth information, the instant messaging application may determine N to-be-downloaded messages according to the preset rule. Parameters in the preset rule include, for example, but are not limited to: the travel location in the fourth information, predicted duration of being in a scenario with weak network coverage or a scenario without network coverage in the travel scenario, a chat time, a chat frequency, a type of an instant message (for example, a picture type, a video type, or a document type); or a size of an instant message.

In some embodiments, the instant messaging application may set a buffer threshold according to the preset rule, and a sum of sizes of the N messages is less than or equal to the buffer threshold. Optionally, the buffer threshold may be determined based on the travel location in the fourth information. Optionally, the buffer threshold may be determined based on the predicted duration of being in a scenario with weak network coverage or a scenario without network coverage in the travel scenario. For example, if the travel location in the fourth information is an airport, the buffer threshold may be 500 MB. If the travel location included in the fourth information is a railway station/D-train station, the buffer threshold may be 200 MB.

In some embodiments, the instant messaging application may set a download sequence according to the preset rule, and subsequently download instant messages in the download sequence. The N messages are first N downloaded messages. A specific example is as follows.

Optionally, the download sequence may be determined based on the type of an instant message. For example, a message of a picture type is preferentially downloaded, then a message of a document type is downloaded, a message of a video type is downloaded, and finally a message of another type is downloaded.

Optionally, the download sequence may be determined based on the size of an instant message. For example, instant messages are downloaded in ascending order.

Optionally, the download sequence may be determined based on the chat time. For example, instant messages in a chat are downloaded in descending order of chat times.

Optionally, the download sequence may be determined based on the chat frequency. For example, instant messages in a chat are downloaded in descending order of chat frequencies.

For example, the N messages may be instant messages of X chats with the latest chat time and the highest chat frequency, and for one of the chats, the instant messaging application buffers the first Z instant messages whose sizes are relatively small in the latest Y instant messages, where X, Y, and Z are all positive integers, X, Y, and Z may be determined based on the buffer threshold, and the total size of N buffered messages is less than or equal to the buffer threshold. This is not limited thereto. In some other examples, the N messages may be instant messages of X chats with the latest chat time and the highest chat frequency, and for one of the chats, the instant messaging application buffers the latest Y instant messages. A specific manner of how to determine the N to-be-downloaded messages is not limited in this application.

S304: The instant messaging application downloads original content of the N messages from a server, and stores the original content in an original message buffer of the electronic device.

In some embodiments, when determining that the electronic device is currently in a travel scenario/the user is going to travel, the electronic device may establish the original message buffer to store the original content of the N messages.

In some embodiments, S304 may also be understood as pulling the original content of the N messages in the server to a local buffer of the electronic device, where pulling is downloading data stored in the server to a local memory of the electronic device.

In some embodiments, after receiving the fourth information, the instant messaging application may perform S303 and S304, and display prompt information. For example, the electronic device may display the user interface 620 shown in FIG. 6B. The signal identifier 621 on the user interface 620 indicates that the electronic device 100 currently accesses a 5G network with five signal bars (namely, full signal bars) and accesses a Wi-Fi network, that is, the electronic device is in a scenario in which network performance is relatively good. The user interface 620 includes prompt information 622 ("The intelligent offline mode is enabled"), indicating that the intelligent offline mode is enabled. The instant messaging application performs S303 and S304 only when the intelligent offline mode is enabled.

In some embodiments, after the instant messaging application downloads the original content of the N messages from the server, the server may reduce timeout periods corresponding to the N original messages, which reduces storage load of the server. For example, before the instant messaging application downloads the original content of the N messages from the server, the server deletes the original content of the N messages when a storage time exceeds 24 hours. After the instant messaging application downloads the original content of the N messages from the server, the server deletes the original content of the N messages when the storage time exceeds 12 hours.

S305: When the electronic device receives a user operation used to obtain original content of a first message, the instant messaging application obtains the original content of the first message from the original message buffer.

In some embodiments, the first message is any one of the N messages stored in the original message buffer of the electronic device.

In some embodiments, S305 may be understood as adjusting a download path corresponding to an instant message. When the electronic device receives a user operation used to obtain the original content of the first message, the instant messaging application obtains the original content of the first message from an adjusted download path (namely, the original message buffer). The download path before adjustment is the server.

S306: The instant messaging application displays the original content of the first message.

For example, the first message is the message 614 on the user interface 610 shown in FIG. 6A. The electronic device 100 may receive a user operation (for example, a tap operation) performed on the message 614, and in response to the user operation, display the user interface 630 shown in FIG. 6C. The user interface 630 includes the signal identifier 631 and the picture 632. The signal identifier 631 indicates that the electronic device currently cannot access a network, that is, the electronic device is in a scenario without network coverage. The picture 632 is the original content of the message 614, that is, the original picture of the message 614 in the picture form.

In some embodiments, for an original message stored in the original message buffer, when a storage time is greater than or equal to preset duration (for example, 24 hours), the electronic device may delete the message.

In some embodiments, for any original message stored in the original message buffer, if the electronic device displays original content of the message, the message may be stored in a memory of the electronic device, and the message stored in the original message buffer is deleted. If the electronic device does not receive a user operation used to obtain the original content of the message, the electronic device may delete, when a storage time is greater than or equal to the preset duration (for example, 24 hours), the message stored in the original message buffer.

In a possible implementation, the method further includes the following steps.

S307: The scenario detection module determines that a destination in the travel scenario has been arrived at.

S307 is similar to S107 in FIG. 7. For details, refer to the description of S107 in FIG. 7. In the description, S102 is replaced with S301.

In some embodiments, when the scenario detection module detects that the user arrives at the travel destination, S308 may be performed.

S308: The scenario detection module sends, to the instant messaging application, fifth information indicating that the destination has been arrived at.

S309: When the electronic device receives the user operation used to obtain original content of a second message, the instant messaging application downloads the original content of the second message from the server.

In some embodiments, S307 may be understood as: when determining that the destination has been arrived at, restoring the download path corresponding to the instant message to the download path (namely, the server) before adjustment. When the electronic device receives a user operation used to obtain the original content of the second message, the instant messaging application obtains the original content of the second message from the download path before adjustment. In some embodiments, the second message is a message other than the N messages described in S304, that is, the original content of the second message is not stored in the original message buffer.

S310: The instant messaging application displays the original content of the second message.

This is not limited to the foregoing examples. In some other embodiments, S307 and S308 may also be replaced with the following: The instant messaging application detects that the network is recovered.

This is not limited to the foregoing example. In some other embodiments, if the second message is one of the N messages stored in the original message buffer of the electronic device, in S309, the electronic device may directly obtain the original content of the second message from the original message buffer.

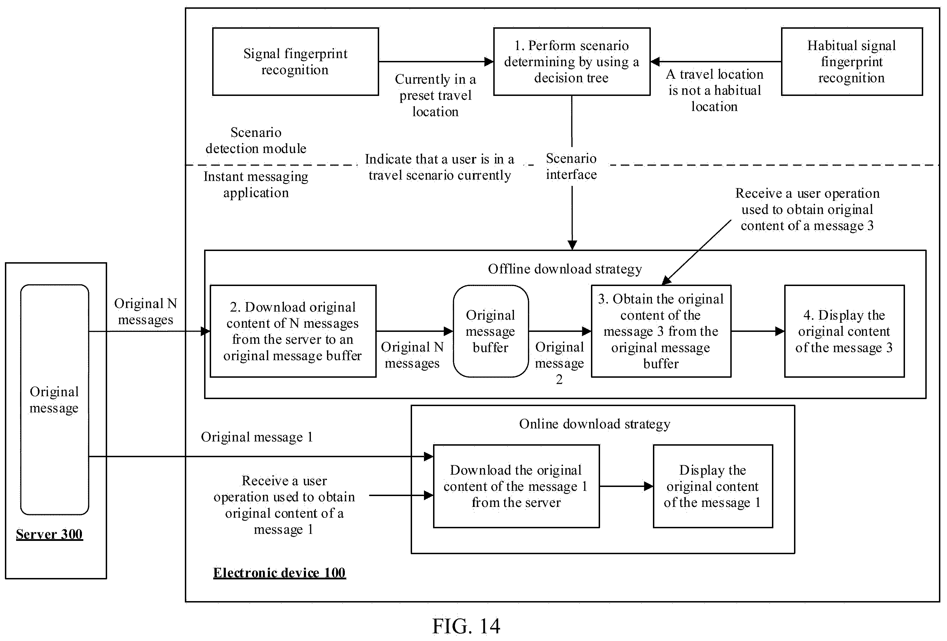

In some embodiments, for an implementation example of S301 to S310, refer to FIG. 14. As shown in FIG. 14, the scenario detection module of the electronic device 100 may perform signal fingerprint recognition, and recognize that the electronic device 100 is currently in the preset travel location. The scenario detection module may further perform habitual signal fingerprint recognition, and recognize that the travel location is not a habitual location. (1) The scenario detection module may perform scenario determining by using a decision tree based on the foregoing recognition that the user is currently located in the preset travel location and the travel location is not the habitual location. The scenario detection module may determine that the user is currently in the travel scenario, and indicate, to the instant messaging application through a scenario interface, that the user is currently in the travel scenario. The instant messaging application may adjust a download strategy from an online download strategy to an offline download strategy based on an indication of the scenario detection module. For description of the online download strategy, refer to the description of the communication process shown in FIG. 12. Details are not described again. When the instant messaging application works based on the offline download strategy, (2) the original content of the N messages may be downloaded from the server 300 to the original message buffer; and (3) when the electronic device receives a user operation used to obtain original content of a message 3, the original content of the message 3 may be obtained from the original message buffer, and (4) the original content of the message 3 is displayed.

In the embodiments shown in FIG. 13 and FIG. 14, after receiving the indication that the user is going to travel, the instant messaging application may download the original content of the N messages to the original message buffer. When receiving the user operation used to obtain the original content of any one of the N messages, the electronic device does not download the original content of the message from the server, but obtains the original content of the message from the original message buffer for display. In this way, the user can normally view the instant message in the travel scenario (which may include a scenario with weak network coverage or a scenario without network coverage), which improves user experience.

In some embodiments, when determining that the electronic device is in the travel scenario, the electronic device may increase a charging speed. For example, a more aggressive charging strategy is used to obtain more power, so that the user can normally use the electronic device in the travel scenario.

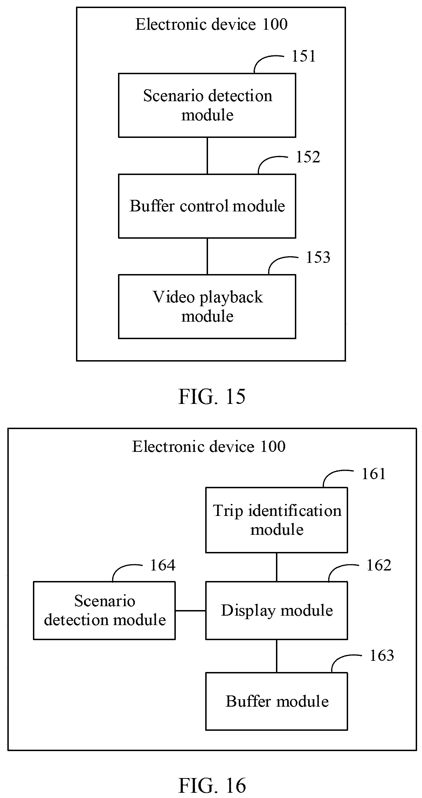

FIG. 15 shows an example of a diagram of a software structure of the electronic device 100.

As shown in FIG. 15, the electronic device 100 includes a scenario detection module 151, a buffer control module 152, and a video playback module 153, where any two of the modules may be connected to and communicate with each other.

The scenario detection module 151 is configured to determine whether a user is in a preset travel scenario. For a specific example, refer to the description of S102 in FIG. 7. When determining that the user is in a travel scenario, the scenario detection module 151 may notify the buffer control module 152 and optionally the video playback module 153. In some embodiments, the scenario detection module 151 is further configured to determine whether the user arrives at a destination in the travel scenario. For a specific example, refer to the description of S107 in FIG. 7. When determining that the user arrives at the destination in the travel scenario, the scenario detection module 151 may notify the buffer control module 152 and optionally the video playback module 153.

The buffer control module 152 is configured to buffer video data based on at least one buffer queue based on a notification sent by the scenario detection module 151, which may be referred to as maintaining the at least one buffer queue. The video playback module 153 is configured to play a video based on a buffer queue maintained by the buffer control module 152.

In some embodiments, when the user is not in the travel scenario, the buffer control module 152 may maintain a first buffer queue corresponding to an online video. In addition, the video playback module 153 may play the video based on the first buffer queue, which may be understood as "playing while downloading". For example, the high-priority queue shown in FIG. 8 is the first buffer queue, and includes the buffer queue 1 to the buffer queue 4. When the buffer control module 152 buffers the data of the first video based on the buffer queue 1 in the first buffer queue, the video playback module 153 plays the first video based on the buffer queue 1. For a specific example, refer to the description of S101 in FIG. 7.

In some embodiments, after receiving the notification that is sent by the scenario detection module 151 and that indicates that the user is in the travel scenario, the buffer control module 152 adds a second buffer queue that corresponds to an offline video and that is to be maintained, that is, when the user is in the travel scenario, the buffer control module buffers video data of the online video based on the first buffer queue, and buffers video data of the offline video based on the second buffer queue. For a specific example, refer to the description of S104 in FIG. 7.

In some embodiments, the video playback module 153 may perform frame freezing detection. For a specific example, refer to the description of S105 in FIG. 7. In some embodiments, when playing a video based on the first buffer queue, the video playback module 153 may play a video buffered in the second buffer queue. For example, the low-priority queue shown in FIG. 8 is the second buffer queue, including the buffer queue 5 to the buffer queue 12. Data of the second video is buffered in the buffer queue 5, and the video playback module 153 plays the second video based on the buffer queue 5. Optionally, the video playback module 153 may play the video based on the first buffer queue when a network is recovered or the user arrives at the destination in the travel scenario. For a specific example, refer to the description of S106 in FIG. 7.

In some embodiments, the second buffer queue maintained by the buffer control module 152 when the user is in the travel scenario may include a short-term queue and a long-term queue. Optionally, a quantity of the short-term queue is less than a quantity of the long-term queue. Optionally, a buffering priority of the short-term queue is higher than a buffering priority of the long-term queue. The video playback module 153 may play a video buffered in the short-term queue when duration of frame freezing during video playback based on the first buffer queue is less than or equal to first duration, or play a video buffered in the long-term queue when duration of frame freezing during video playback based on the first buffer queue is greater than or equal to second duration. The first duration and the second duration are the same or different. For a specific example, refer to the descriptions of the short-term queue and the long-term queue in S106 in FIG. 7.

In some embodiments, after receiving the notification that is sent by the scenario detection module 151 and that indicates that the user arrives at the destination in the travel scenario, the buffer control module 152 releases the second buffer queue. For a specific example, refer to the description of S109 in FIG. 7.

In some embodiments, the electronic device 100 further includes a display module. After receiving the notification that is sent by the scenario detection module 151 and that indicates that the user arrives at the destination in the travel scenario, the display module may display first content, where the first content is used to prompt the user to buffer an offline video, or the first content indicates that an offline video is being buffered currently. For an example of the first content, refer to the description of the prompt information displayed after the first information is received in S104 in FIG. 7.

In some embodiments, the electronic device 100 further includes a display module. The display module may display second content when the video playback module 153 plays the video buffered in the second buffer queue, where the second content indicates that a currently played video is an offline video. For an example of the second content, refer to the description of the information indicating that a played short video is an offline video in S106 in FIG. 7. In some embodiments, when storage duration of a third video buffered in the second buffer queue is greater than or equal to third duration, the buffer control module 152 may delete the third video from the second buffer queue, to buffer another video into the second buffer queue. Optionally, the buffer control module 152 may store the third video in another buffer of the electronic device 100.

For example, the buffer control module 152 and the video playback module 153 in FIG. 15 are modules included in a short video application or a video application.

FIG. 16 shows an example of a diagram of another software structure of the electronic device 100.

As shown in FIG. 16, the electronic device 100 includes a travel identification module 161, a display module 162, a buffer module 163, and a scenario detection module 164, where any two of the modules may be connected to and communicate with each other.

The travel identification module 161 is configured to obtain unmade-travel information of a user. For a specific example, refer to the description of S201 in FIG. 10. The travel identification module 161 is further configured to predict, according to travel information, whether the user is in a preset travel scenario within preset duration. In some embodiments, when a difference between a current time and a departure time in first travel information is less than or equal to the preset duration, the travel identification module 161 predicts that the user is in a travel scenario within the preset duration. Optionally, the first travel information is travel information with an earliest departure time in the unmade-travel information. For a specific example, refer to the description of S202 in FIG. 10. When predicting that the user is in the travel scenario within the preset duration, the travel identification module 161 may notify the display module 162.

The display module 162 is configured to display third content after receiving a notification that is sent by the travel identification module 161 and that indicates that the user is in the travel scenario within the preset duration. The third content is used to prompt the user to buffer application data. For an example of the third content, refer to the description of the first widget in S202 in FIG. 10.

The buffer module 163 is configured to buffer application data of at least one application. In some embodiments, when the electronic device 100 receives a user operation (for example, a user operation for the third content) used to buffer the application data, the buffer module 163 may buffer the application data of the at least one application.

The scenario detection module 164 is configured to determine whether the user is in the preset travel scenario. For a specific example, refer to the description of S102 in FIG. 7. When determining that the user is in the travel scenario, the scenario detection module 164 may notify the display module 162.

The display module 162 is further configured to display fourth content after receiving the notification that is sent by the scenario detection module 164 and that indicates that the user is in the travel scenario. The fourth content indicates the application data that is of the at least one application and that is buffered by the buffer module 163. For an example of the fourth content, refer to the description of the second widget in S206 in FIG. 10.

For example, the travel identification module 161, the display module 162, and the buffer module 163 in FIG. 16 are modules included in a leftmost screen application.

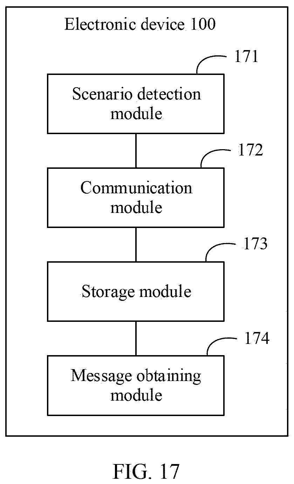

FIG. 17 shows an example of a diagram of another software structure of the electronic device 100.

As shown in FIG. 17, the electronic device 100 includes a scenario detection module 171, a communication module 172, a storage module 173, and a message obtaining module 174, where any two of the modules may be connected to and communicate with each other.

The scenario detection module 171 is configured to determine whether a user is in a preset travel scenario. For a specific example, refer to the description of S102 in FIG. 7. When determining that the user is in a travel scenario, the scenario detection module 171 may notify the communication module 172.

The communication module 172 is configured to communicate with a network device. In some embodiments, when another electronic device sends an instant message to the electronic device 100, the communication module 172 may receive a compressed instant message (which may also be referred to as compressed content of the instant message, for example, a title, a keyword, a type, a size, a thumbnail, or an icon) sent by the network device. The compressed instant message may be used to be displayed on the electronic device 100.

In some embodiments, the communication module 172 is further configured to: after receiving a notification that is sent by the scenario detection module 164 and that indicates that the user is in the travel scenario, obtain original content of at least one instant message from the network device, and stores the obtained original content of the at least one instant message into the storage module 173. The at least one instant message is a message of corresponding compressed content previously received by the communication module 172. Optionally, the at least one instant message is determined according to a preset rule, and a parameter involved the preset rule includes but is not limited to at least one of a travel location in the travel scenario, predicted duration of being in an area with weak network coverage or an area without network coverage in the travel scenario, a chat time, a chat frequency, a type of a chat message, or a size of a chat message. For a specific example, refer to the descriptions of S303 and S304 in FIG. 13.

The storage module 173 is configured to store the original content of the at least one instant message obtained by the communication module 172. In some embodiments, when storage duration of original content of a second message in the storage module 173 is greater than or equal to preset duration, the original content of the second message in the storage module 173 is deleted. Optionally, the electronic device 100 may store the original content of the second message in another storage module.

The message obtaining module 174 is configured to obtain original content of a first message from the storage module 173 when receiving a user operation for the first message. The first message is any instant message whose original content is stored in the storage module 173. The original content of the first message may be displayed on the electronic device 100. For a specific example, refer to the descriptions of S305 and S306 in FIG. 13.

For example, the communication module 172, the storage module 173, and the message obtaining module 174 in FIG. 17 are modules included in an instant messaging application.

In embodiments of this application, the electronic device may perform scenario identification, to determine whether the electronic device is in the travel scenario. After the indication indicating that the user is in the travel scenario is received, different applications execute different optimization strategies. For example, for an optimization strategy of the short video application, refer to the embodiments shown in FIG. 7 to FIG. 9 and FIG. 15. For an optimization strategy of the leftmost screen application, refer to the embodiments shown in FIG. 10, FIG. 11, and FIG. 16. For an optimization strategy of the instant messaging application, refer to the embodiments shown in FIG. 13, FIG. 14, and FIG. 17. By executing these optimization strategies, the user can normally use the applications in the travel scenario (including the scenario with weak network coverage or the scenario without network coverage), which improves user experience.

In the foregoing embodiments, the short video application, the video application, the leftmost screen application, and the instant messaging application are used as examples for description. During specific implementation, the short video application, the video application, the leftmost screen application, or the instant messaging application may alternatively be another application. This is not limited in this application.

All or a part of the method provided in embodiments of this application may be implemented through software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, procedures or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like. In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An application optimization method, applied to an electronic device, wherein the method comprises:
buffering data of a first video and playing the first video based on a first queue, and buffering video data based on a second queue; and
when frame freezing occurs during video playback based on the first queue, playing a second video based on data that is of the second video and that is buffered in the second queue.

2. The method according to claim 1, wherein the buffering video data based on a second queue comprises:
buffering video data based on the second queue when determining that a user is in a preset scenario.

3. The method according to claim 2, wherein the preset scenario is a travel scenario, and the determining that a user is in a preset scenario comprises:
determining that the user is in a first travel location, wherein the first travel location is any one of an airport, a railway station, a high-speed railway station, a bus station, a subway station, a bus stop, a highway entrance/exit, or a dock; and
when the first travel location is not a habitual activity location of the user, determining that the user is in the travel scenario.

4. The method according to claim 2, wherein the method further comprises:
displaying first information when determining that the user is in the preset scenario, wherein the first information is used to prompt the user to buffer an offline video, or the first information indicates that an offline video is being buffered currently, and the second queue is used to buffer the offline video.

5. The method according to any one of claims 1 to 4, wherein the second queue comprises a short-term queue and a long-term queue, a quantity of the short-term queue is less than a quantity of the long-term queue, and a buffering priority of the short-term queue is higher than a buffering priority of the long-term queue; and
the playing a second video based on data that is of the second video and that is buffered in the second queue comprises:
when duration of frame freezing during video playback based on the first queue is less than or equal to first duration, playing the second video based on data that is of the second video and that is buffered in the short-term queue comprised in the second queue; or
when duration of frame freezing during video playback based on the first queue is greater than or equal to second duration, playing the second video based on data that is of the second video and that is buffered in the long-term queue comprised in the second queue, wherein the first duration is the same as or different from the second duration.

6. The method according to any one of claims 1 to 4, wherein the method further comprises:
displaying second information when playing the second video based on the data that is of the second video and that is buffered in the second queue, wherein the second information indicates that the second video is an offline video.

7. The method according to any one of claims 2 to 4, wherein the preset scenario is the travel scenario, and the method further comprises:
releasing the second queue when determining that the user arrives at a destination in the travel scenario.

8. The method according to any one of claims 1 to 4, wherein the method further comprises:
deleting a third video from the second queue when storage duration of the third video that is buffered in the second queue is greater than or equal to third duration.

9. An application optimization method, applied to an electronic device, wherein the method comprises:
displaying first information when predicting that a user is in a preset scenario within preset duration, wherein the first information is used to prompt the user to buffer application data;
receiving a first user operation;
buffering application data of at least one application in response to the first user operation; and
displaying second information when determining that the user is in the preset scenario, wherein the second information indicates buffered application data of the at least one application.

10. The method according to claim 9, wherein the preset scenario is a travel scenario, and the predicting that a user is in a preset scenario within preset duration comprises:
obtaining first travel information of the user; and
when a difference between a current time and a departure time in the first travel information is less than or equal to the preset duration, predicting that the user is in the travel scenario within the preset duration.

11. The method according to claim 10, wherein the first travel information is one with an earliest departure time in all travel information of the user.

12. The method according to any one of claims 9 to 11, wherein the preset scenario is the travel scenario, and the determining that the user is in the preset scenario comprises:
determining that the user is in a first travel location, wherein the first travel location is any one of an airport, a railway station, a high-speed railway station, a bus station, a subway station, a bus stop, a highway entrance/exit, or a dock; and
when the first travel location is not a habitual activity location of the user, determining that the user is in the travel scenario.

13. An application optimization method, applied to an electronic device, wherein the method comprises:
receiving compressed content of a first message sent by a network device;
obtaining original content of the first message from the network device, and storing the original content of the first message in a first buffer of the electronic device;
receiving a user operation for the first message;
obtaining the original content of the first message from the first buffer in response to the user operation; and
displaying the first message based on the original content of the first message.

14. The method according to claim 13, wherein the obtaining original content of the first message from the network device comprises:
obtaining the original content of the first message from the network device when determining that a user is in a preset scenario.

15. The method according to claim 14, wherein the preset scenario is a travel scenario, and the determining that a user is in a preset scenario comprises:
determining that the user is in a first travel location, wherein the first travel location is any one of an airport, a railway station, a high-speed railway station, a bus station, a subway station, a bus stop, a highway entrance/exit, or a dock; and
when the first travel location is not a habitual activity location of the user, determining that the user is in the travel scenario.

16. The method according to any one of claims 13 to 15, wherein the first message is determined according to a preset rule, and a parameter involved the preset rule comprises at least one of a travel location in the preset scenario when being the travel scenario, predicted duration of being in an area with weak network coverage or an area without network coverage in the preset scenario, a chat time, a chat frequency, a type of a chat message, or a size of a chat message.

17. The method according to any one of claims 13 to 15, wherein the method further comprises:
deleting original content of a second message in the first buffer when storage duration of the original content of the second message in the first buffer is greater than or equal to preset duration.

18. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 17.

19. A computer storage medium, comprising computer instructions, wherein when the computer instructions are run on an electronic device, the electronic device is enabled to perform the method according to any one of claims 1 to 17.
